Europäisches Patentamt

European Patent Office

Office européen des brevets

(19)

(11) **EP 0 699 219 B1**

(12) **EUROPEAN PATENT SPECIFICATION**

(45) Date of publication and mention
of the grant of the patent:
**16.12.1998 Bulletin 1998/51**

(21) Application number: **94917368.6**

(22) Date of filing: **11.05.1994**

(51) Int Cl.6: **C08L 23/08**, C08F 210/16,
C08F 4/602

(86) International application number:
**PCT/US94/05302**

(87) International publication number:
**WO 94/26816 (24.11.1994 Gazette 1994/26)**

(54) **ETHYLENE COPOLYMERS HAVING NARROW COMPOSITION DISTRIBUTION, THEIR PRODUCTION AND USE**

ETHYLEN-COPOLYMERE MIT ENGER ZUSAMMENSETZUNGSVERTEILUNG, IHRE HERSTELLUNG UND IHRE VERWENDUNG

COPOLYMERES D'ETHYLENE AYANT UNE DISTRIBUTION ETROITE DE COMPOSITION, LEUR PRODUCTION ET UTILISATION

(84) Designated Contracting States:
**BE DE ES FR GB IT NL**

(30) Priority: **13.05.1993 US 61929**

(43) Date of publication of application:
**06.03.1996 Bulletin 1996/10**

(60) Divisional application: **98201808.7 / 0 877 051**

(73) Proprietor: **EXXON CHEMICAL PATENTS INC.**
**Baytown, TX 77520-2149 (US)**

(72) Inventors:
• **BAMBERGER, Robert, Lee**
**Crosby, TX 77532 (US)**

• **GERMAN, Paul, Masten**
**Friendswood, TX 77546 (US)**
• **MALPASS, Gerald, Dixon, Jr.**
**Houston, TX 77059 (US)**
• **LOCKE, Lawrence, Kenneth**
**Seabrook, TX 77586 (US)**

(74) Representative: **Dew, Melvyn John et al**
**Exxon Chemical Europe Inc.**
**P.O.Box 105**
**1830 Machelen (BE)**

(56) References cited:
**EP-A- 0 230 753**          **WO-A-93/03093**
**US-A- 4 705 829**          **US-A- 5 206 075**

**Description**

FIELD OF THE INVENTION

This invention relates generally to polyethylene. More specifically, this invention relates to copolymers of ethylene and a $C_4$-$C_{12}$ monomer having a relatively narrow composition distribution, and to the production and use of such copolymers.

BACKGROUND OF THE INVENTION

Since its commercial introduction in the 1940's, polyethylene has come into very broad use. In the United States alone, well over 8 million tons (7 million metric tons) of polyethylene are manufactured annually. Polyethylene has a vast range of commercial applications, from fuel tanks and seating to disposable diaper liners, stretch wrap films and food packaging.

There are several classes of polyethylene. One of these is linear low density polyethylene (LLDPE), which was commercially introduced in 1978. LLDPE is a copolymer of ethylene and another olefin or diene. The most common comonomers employed are butene, hexene, octene and 4-methyl-pentene-1. LLDPE generally assumes a linear backbone structure with little or no long chain branching. The individual molecules tend to be short chain branched, with branch length and frequency dependent on the type and amount of comonomer. In this regard LLDPE is unlike LDPE (low density polyethylene), which commonly has significant inclusion of long chain branches. LLDPE possesses a combination of characteristics which make it well suited for use in the production of plastic films and sheeting. LLDPE yields a tough, strong film and has processability characteristics in the low melt index grades which permit efficient film production. Downgauging potential is a key advantage of LLDPE. LLDPE films can derive similar properties from less material than films produced from LDPE or other resins. When using LLDPE, film fabricators may elect to keep the same gauge and obtain films with significant property improvement, or they may opt to downgauge and obtain properties similar to those of a thicker LDPE film.

For all their attributes, current LLDPE's are not ideal materials even for films and other applications where they are most commonly used. First, though current LLDPE's have reasonably high strength and toughness, it has long been desired to identify thermoplastic resins which are stronger and tougher still. This would enhance their attractiveness in pallet wrap and other demanding applications. Also, most commercially available LLDPE's contain a significant low molecular weight, n-hexane extractable constituent. Reducing the extractables content would greatly enhance the attractiveness of LLDPE in food packaging applications. It would also tend to decrease reblock, high reblock being undesirable in most film applications. Another deficiency of current LLDPE'S is that the films they yield in blown film production tend to have relatively low clarity and low gloss. This is undesirable in consumer packaging and other uses where a high degree of film clarity is desired.

A number of steps have been taken to overcome the deficiencies of conventional LLDPE'S. One solution is to use additives to correct the deficiencies of concern. For example, anti-block agents are often used to correct excessive reblock. But these agents tend to degrade film strength and clarity. It is also common to blend combinations of different LLDPE's or to blend an LLDPE with an LDPE or other thermoplastic to enhance certain properties. As in correcting reblock, the use of blends often achieves one desired property at the expense of sacrificing another.

Another solution is provided by producing LLDPE resins using single site catalysts such as metallocenes in lieu of the Ziegler-Natta catalysts conventionally employed. Metallocene LLDPE's yield several advantages over conventional LLDPE's, primarily strength, optical properties and low extractables. But this comes at a price. The metallocene LLDPE's commercially available to date are more difficult to process into films than conventional LLDPE's. This can be ameliorated by blending small amounts of other LLDPE'S, LDPE'S or other thermoplastics. But again, improvement in processability through blending comes at a price; here strength is typically compromised.

It would be desirable to produce an LLDPE resin with an improvement in toughness and other properties over Ziegler-Natta LLDPE's, but which does not greatly sacrifice processability.

SUMMARY OF THE INVENTION

It has been discovered that supported metallocene catalyst systems can be used in gas phase polymerization to produce linear low density polyethylene (LLDPE) resins having a materially broader composition distribution than would generally be obtainable in LLDPE polymerization processes employing the same metallocene in an unsupported form. Simultaneously, these resins have a $M_z/M_w$ ratio which is usually slightly broader than that obtainable with an equivalent unsupported metallocene. The resulting LLDPE resins possess a combination of properties which render them superior for many commercially important applications. These resins retain many of the desirable properties of resins typical of unsupported metallocene LLDPE's, such as very low extractables and good optics, yet are tougher and more readily processable than unsupported metallocene LLDPE's.

These LLDPE resins are well suited for applications where a combination of toughness, low n-hexane extractables and good processability is desired. These resins can be fabricated into films having a particularly desirable set of properties-most notably very high impact strengths, high clarity and gloss and low reblock. This makes the resins particularly well adapted for producing cling films for applications such as pallet stretch wrap and food wrap. The resins are also useful in producing other films, such as heavy duty shipping sacks, industrial liners and can liners. The resins can be converted into films using conventional cast film and blown film techniques. More complete details of the inventive resins and the processes for their production and their applications are set forth in the following description of the preferred embodiments.

## BRIEF DESCRIPTION OF THE DRAWINGS

The foregoing aspects, features, and advantages of the invention will become clearer and more fully understood when the following detailed description is read in conjunction with the accompanying drawings, in which:

Figure 1 describes the relationship between the reciprocal square root of the dart impact strength versus the average MD and TD secant modulus of the blown films of the invention as compared to the prior art films.

Figure 2 describes the relationship between the reciprocal square root of the dart impact strength versus the average MD and TD secant modulus of the cast films of the invention as compared to the prior art films.

Figure 3 is a graph of the relationship between the hot tack strength versus seal temperature of the films of the invention as compared to the prior art.

Figure 4 is a graph of the relationship between the peak load heat seal strength and seal temperature of the film of the invention as compared to the prior art.

Figure 5 is a graph of the relationship between the hot tack strength versus seal temperature of the films of the invention as compared to the prior art.

Figure 6 is a graph of the relationship between the peak load heat seal strength and seal temperature of the film of the invention as compared to the prior art.

## DESCRIPTION OF THE PREFERRED EMBODIMENTS OF THE INVENTION

### Introduction

Our invention concerns certain classes of LLDPE resins, their production and applications. These resins have unique properties which make them particularly well suited for use in producing certain classes of polymeric films. The resulting films have combinations of properties rendering them superior to resins previously available for many polymeric film applications. Following is a detailed description of certain preferred resins within the scope of our invention, preferred methods of producing these resins and preferred applications of these resins. Those skilled in the art will appreciate that numerous modifications to these preferred embodiments can be made without departing from the scope of the invention. For example, though the properties of the resins are exemplified in film applications, they have numerous other uses. To the extent our description is specific, this is solely for the purpose of illustrating preferred embodiments of our invention and should not be taken as limiting our invention to these specific embodiments.

We have discovered that certain supported metallocene catalyst systems can be used in gas phase polymerization processes to produce LLDPE resins having properties which are highly desirable for many classes of films and certain other applications. Generally, these resins have a materially broader composition distribution than resins produced in solution or slurry polymerization using the same metallocene catalyst in its unsupported form. Yet, the composition distribution of the present resins is generally narrower than that of ethylene copolymers produced from conventional Ziegler-Natta catalysts. Because several important product properties are affected by composition distribution, our ability to produce intermediate composition distributions yields LLDPE resins having combinations of properties heretofore unobtainable. As used herein, the term LLDPE shall mean all copolymers and terpolymers of ethylene and at least one $C_4$ or higher monomer. This includes those ethylene copolymers and terpolymers having densities less than 0.915 $g/cm^3$, which are sometimes in the industry referred to as VLDPE's or ULDPE's, as well as resins with densities at or above 0.915 $g/cm^3$.

### Production of the Resins of the Invention

The present LLDPE resins are produced using supported metallocene catalysts. In one preferred embodiment, the catalyst system is bis(1-methyl, 3-n-butyl cyclopentadienyl) zirconium dichloride reacted with methylalumoxane (MAO) and deposited on dehydrated silica. This catalyst system was used to generate the hexene-LLDPE resins used in the film evaluations detailed in Tables I and II.

More specifically, quantities of the preferred catalyst system sufficient for pilot plant runs may be produced using the following procedure. First, a silica support is dehydrated at 200°C for 4 hours in a fluidized bed dehydrator. We used Davison 948 silica manufactured by the Davison Chemical Division of W. R. Grace Corporation. Those skilled in the art will appreciate that other supports could be substituted. 800 grams of this dehydrated silica is placed in a clean, dry, nitrogen sparged mixer reactor at 24°C. To this, 2.00 liters of toluene and 1.06 liter of 30% MAO in toluene are rapidly added while stirring. The temperature of the reactor is increased to 68°C and held at this temperature for four hours while continuing mixing. Next, 23 grams of bis(1-methyl, 3-n-butyl cyclopentadienyl) zirconium dichloride dissolved in 50 liters of toluene are rapidly added while continuing to stir. Synthesis and purification of this metallocene is performed using techniques known to those skilled in the art. The mixer is maintained at 68°C for one hour following the addition of the metallocene. Vacuum is maintained on the reactor until the slurry dries to a free flowing solid with volatiles of 10% or less. Mixing is continued throughout drying. This process yields about 1.0 kg ofthe completed catalyst system. Those skilled in the art will appreciate that the process can be scaled up to produce the catalyst system in commercial quantities.

In an alternative embodiment, a similar catalyst system is produced using the same bis(1-methyl, 3-n-butyl cyclopentadienyl) zirconium dichloride metallocene In this method, however, the MAO is formed in situ. 4.82 liters of a 15% trimethyl aluminum in heptane solution is added to a clean, dry, nitrogen sparged mixer. The reactor is cooled to -4°C. To this solution 700g of hydrated silica with a loss on ignition (OH content) value of 12.5% is slowly added, maintaining a temperature within the range of -4°C to 10°C. The silica addition should occur at a continuous slow rate over a 1 to 2 hour period. Those skilled in the art will appreciate that the reaction of trimethyl aluminum with the moisture contained in the silica is highly exothermic and must be carefully controlled to avoid temperature transients and other process problems. The silica used is Davison 948 manufactured by the Davison Chemical Division of W. R. Grace Corporation. Following completion of silica addition, the temperature is maintained at 10°C and 15.75g of the metallocene dissolved in heptane is added. The reactor temperature is then increased to 68°C over 1 hour, and then is maintained at 68°C for one hour while mixing. Mixing is then ceased and the solids are permitted to settle for 30 minutes as the temperature is dropped to 38°C. The liquid phase is decanted and the remaining slurry is dried at 68°C under vacuum for about 4 hours, until the residue becomes a free-flowing solid with a volatiles level of 10% or less. This process yields about 0.9 kg of the completed catalyst system.

However, those skilled in the art will appreciate that a suitable silica supported catalyst system employing this metallocene and an MAO co-catalyst can be produced in a variety of other manners. For example, the absolute and relative amounts of the metallocene and co-catalyst can be varied as necessary to optimize the catalyst system. The support can also be altered.

Further, we have found that other metallocenes can be substituted for that described above. For example, we have achieved generally satisfactory results with other metallocenes, such as bis(n-butyl-cyclopentadienyl) zirconium dichloride and bis(i-propyl-cyclopentadienyl) zirconium dichloride. Each different metallocene will yield a unique composition distribution. As with the preferred metallocene, we have found that these alternatives, when used in supported form in a continuous gas-phase polymerization process, yield LLDPE resins with a somewhat broader composition distribution and a somewhat higher $M_z/M_w$ than is obtained when using the same metallocene in its unsupported form. This is very significant because the slight broadening of the composition distribution and the slight increase in $M_z/M_w$ yield improvements in processability of the resins and also in certain important properties of products incorporating the resins. While we have only tested a relatively small number of metallocenes in the process of this invention, we contemplate that a significant number, including substituted and unsubstituted mono-, his and tris cyclopentadienyl metallocenes, could be successfully employed. Similarly, it is contemplated that co-catalysts other than MAO could be used. It will also be desirable to used mixed metallocene catalyst systems in some applications. Using a mixed metallocene system will typically yield a broader molecular weight distribution than a single metallocene system.

In the preferred embodiment, the resin is produced using a continuous gas-phase fluidized - bed polymerization process. Such continuous, gas-phase, fluidized bed polymerization processes are well known to those skilled in the art. Certain parameters of the gas-phase process must be adjusted somewhat where a supported metallocene is used. For example, the rate of comonomer incorporation by a metallocene catalyst is higher than that for a conventional coordination catalyst. Accordingly, to achieve a given LLDPE density the comonomer should be maintained at a lower concentration in the reactor than would be the case were a Ziegler-Natta catalyst employed. Table III sets forth certain operating data we developed in producing various LLDPE resin grades utilizing the preferred catalyst system in our 16" (41 cm) gas phase pilot plant. Those skilled in the art will appreciate that for other reactor configurations certain of these conditions will vary.

## Characteristics of the Resins of the Invention

A key characteristic of the LLDPE resins of the present invention is their composition distribution. As is well known to those skilled in the art, the composition distribution of a copolymer relates to the uniformity of distribution of comonomer among the molecules of the copolymer. Metallocene catalysts are known to incorporate comonomer very evenly among the polymer molecules they produce. Thus, copolymers produced from a catalyst system having a single metallocene component have a very narrow composition distribution - most of the polymer molecules will have roughly the same comonomer content, and within each molecule the comonomer will be randomly distributed. Ziegler-Natta catalysts, on the other hand generally yield copolymers having a considerably broader composition distribution. Comonomer inclusion will vary widely among the polymer molecules.

A measure of composition distribution is the "Composition Distribution Breadth Index" ("CDBI"). CDBI is defined as the weight percent of the copolymer molecules having a comonomer content within 50% (that is, 25% on each side) of the median total molar comonomer content. The CDBI of a copolymer is readily determined utilizing well known techniques for isolating individual fractions of a sample of the copolymer. One such technique is Temperature Rising Elution Fraction (TREF), as described in Wild, et al., J. Poly. Sci., Poly. Phys. Ed., vol. 20, p. 441 (1982), which is incorporated herein by reference.

To determine CDBI, a solubility distribution curve is first generated for the copolymer. This may be accomplished using data acquired from the TREF technique described above. This solubility distribution curve is a plot of the weight fraction of the copolymer that is solubilized as a function of temperature. This is converted to a weight fraction versus composition distribution curve. For the purpose of simplifying the correlation of composition with elution temperature all fractions are assumed to have a Mn $\geq$ 15,000, where Mn is the number average molecular weight of the fraction. These low weight fractions generally represent a trivial portion of the resin of the present invention. The remainder of this description and the appended claims maintain this convention of assuming all fractions have Mn $\geq$ 15,000 in the CDBI measurement.

From the weight fraction versus composition distribution curve the CDBI is determined by establishing what weight percent of the sample has a comonomer content within 25% each side of the median comonomer content. Further details of determining the CDBI of a copolymer are known to those skilled in the art. See, for example, PCT Patent Application WO 93/03093, published February 18, 1993.

The LLDPE resins of the present invention have CDBI's generally in the range of 50-90%, usually in the range of 55%-85% and most typically in the range of 60-75%. In our CDBI tests of selected hexene grade resins produced using the preferred catalyst systems, we obtained CDBI's within the range of about 60% to about 65%. Obviously, higher or lower CDBI's may be obtained using other catalyst systems, other grades, and with changes in the operating conditions of the gas-phase process employed. Table V provides a comparison of the CDBI's obtained for certain preferred resins and commercially available resins.

The LLDPE resins of the invention are also distinguishable from known LLDPE resins on the basis of their molecular weight distribution (MWD). The MWD of the present resins is materially broader than that of LLDPE's produced using the same metallocene in an unsupported form in a solution or slurry polymerization process. The polydispersity index ($M_w/M_n$) of the resins of the invention are typically in the range of 3-4, compared to a range of 2-3 for known metallocene LLDPE resins. In this regard the resins of the invention are similar to many commercially available LLDPE resins produced using Ziegler-Natta catalysts. However, the tails of the molecular weight distribution curve for the present resin are considerably smaller than those of known Ziegler-Natta LLDPE's. This distinction is readily apparent by comparing the ratio of $M_z/M_w$ (the ratio of the third moment to the second moment) and $M_{z+1}/M_w$ (ratio of the fourth moment to the second moment). Utilizing the present invention, LLDPE resins can be produced with an $M_z/M_w$ less than 2.0, usually less than 1.9 and most typically in the range of 1.6 - 1.9. In contrast, the ratio of $M_z/M_w$ for Ziegler-Natta resins is typically above 2.5. Similarly, the value of $M_{z+1}/M_w$ for the present LLDPE resins is less than 4.0, usually less than 3.0 and most typically in the range of 2.3-3.0. For Ziegler-Natta LLDPE'S $M_{z+1}/M_w$ is generally much higher - typically above 4.0. Table V provides further data regarding $M_z$, $M_w$, $M_{z+1}$ for our resins and also for some commercially available resins.

Those skilled in the art will appreciate that there are several methods available for determining the molecular weight distribution of a polyethylene sample. For the purpose of Table V and other reference to $M_w$, $M_z$ and $M_{z+1}$ given in this application and the appended claims, molecular weight distribution is determined with a Waters Gel Permeation Chromatograph equipped with ultrastyro gel columns operated at 145°C. Trichlorobenzene is used as the eluting solvent. The calibration standards are sixteen polystyrenes of precisely known molecular weight, ranging from a molecular weight of 500 to a molecular weight of 5.2 million. NBS 1475 polystyrene was also used as a calibration standard.

## Properties of Films Produced From the Resins of the Invention

The resins produced using the supported metallocene catalyst described above are in many applications markedly superior to commercially available products. These resins are particularly useful for films. Table I sets forth the properties of a cast film produced from a 3.2 MI, 0.918 g/cm$^3$ hexene LLDPE resin ("resin A") of the present invention and compares these properties to the corresponding properties of films produced from two commercially available hexene LLDPE's derived from conventional Ziegler-Natta catalysts.

It is readily seen that the film produced from this resin is considerably superior in dart impact strength. The puncture force and tensile strength at break also represent a significant improvement. The measured properties which are materially diminished are TD Elmendorf tear and secant modulus. However, as those skilled in the art will appreciate the balance of machine direction to transverse direction (MD/TD) Elmendorf tear is indicative of film toughness.

The secant modulus is somewhat lower for cast films produced from our resin. However, depending on the application, this could represent a benefit or detriment. For example in stretch films, a lower modulus generally corresponds with a softer/easier to stretch film which gives better performance. With the exception of Elmendorf tear and modulus, the great enhancement in toughness and other properties are obtained without materially sacrificing other important film characteristics. The enhanced film toughness and other properties provided by these resins allow improved performance or downgauging in most film applications.

Table II sets forth the properties of a blown film produced from a 0.97 MI, 0.9188 g/cm$^3$ ethylene - hexene copolymer resin ("resin B") of the present invention and compares these properties to the corresponding properties of a commercially available Ziegler-Natta ethylene-hexene copolymer. From Table II, the haze and gloss numbers for the films of our invention are substantially improved over their Ziegler-Natta counterparts. The ratios of MD/TD tensile and tear are more balanced than the comparative resins, which is a further indication of the overall toughness superiority of films of our invention compared to the Ziegler-Natta based films. The high MD/TD tensile at break exhibited by the films of our invention is a very important property in trash can liner bags, as are the superior puncture properties and dart impact.

The present resins demonstrated good processability characteristics in cast film applications. We found the cast web stability, edge pinning, trim handling, on-line optics, gel content and appearance to be generally equivalent or superior to current commercial resins. These characteristics can yield operating factor improvement and enhance product quality. The present resins required slightly higher melt temperature and extrusion power consumption than Ziegler-Natta resins of similar density and melt index. This modest disadvantage is overshadowed by the enhanced film properties detailed previously and has generally not represented a problem in our trials.

In evaluating processability characteristics in blown film applications we found the same advantages generally observed for cast applications. In some instances a significant decrease (5-10%) in throughput was observed for our neat resins. Those skilled in the art will understand that such debits can be minimized by a number of changes; modifying processing conditions, matching a resin grade to types of extruding equipment, or blending or coextruding with LDPE or other processability enhancing materials.

A particular attribute of the present resins is their very low level of extractable components. This is particularly pronounced for hexene and octene grades with densities in the range of 0.85-0.960 g/cm$^3$, preferably 0.90 to 0.94 g/cm$^3$, more preferably 0.910 to 0.930, most preferably 0.915 to 0.925 g/cm$^3$. The melt index is the range of 0.1 to 100 dg/min, preferably 0.1 to 10 dg/min, more preferably 0.1 to 5 dg/min. The extractables level for most grades of our resins are in the range of between 5.0% to below 0.1%, preferably below 2.0%, more preferably below 1.0%, even more preferably below 0.8% and most preferably below 0.5%. The extractables level of our resins generally increases with decreasing molecular weight and decreasing density. At any given molecular weight and density (or side chain branching) our resins have an extractables level significantly below that of the counterpart Ziegler-Natta grade. For the purposes of this specification and the appended claims, the extractables level is measured by exposing film produced from the resin to n-hexane at 50°C for 2 hours. This process is further detailed in 21 CFR 177.1520 (d)(3)(ii). It will be appreciated by those skilled in the art, that the extractables test is subject to substantial variation. The variations maybe due to film thickness (4 mils (101.6 μm) maximum) or any other variable that changes the surface to volume ratio of the film. Film fabrication type (eg. blown, cast) and processing conditions may also change the extractable amount. This low extractables content is particularly valuable in film applications. The low extractables of films produced from these resins makes them well suited for food and medical applications (especially fatty foods at room temperature or elevated temperature). In addition, the low extractables levels cause the films to have considerably lower reblock values in the ethylene copolymer grades made from ethylene and a comonomer containing at least five carbon atoms than films produced from presently available LLDPE's. It will be possible to dispense with, or at least decrease, the need for antiblock agents in films produced from the present resins. This is highly beneficial in that antiblock agents adversely affect the clarity, toughness and strength of film.

Resins of this invention require less slip to achieve a given coefficient of friction, see Table VB.

Furthermore, because of the overall toughness of the films of the invention it is anticipated that the films of the invention will exhibit excellent resistance to flex cracking and pinhole formation.

In the absence of certain additives, e.g., antioxidants, acid neutralizers, etc., conventional linear polyethylenes can partially degrade during high temperature/high shear extrusion. As a consequence, MI decreases, MFR increases, and discoloration (yellowness) increases. The tendency to degrade under these and milder oxidative conditions generally increases as the level of vinyl unsaturation or residual chlorides increase. Traditional Ziegler-Natta gas phase LLDPE'S typically contain about 0.15-0.20 vinyl groups/1000 carbons and 25-35 ppm chlorides. The LLDPE's of the invention typically contain about 0.1 vinyl group/1000 carbons and < 2 ppm chlorides. Therefore, it is predicted that the films of the invention will have less of a tendency to degrade during extrusion and storage, and will have better color (whiteness) retention.

During polyolefin degradation, as chemical bonds break, free radicals are created. If trace levels of oxygen are present in the extruder, these free radicals react with the oxygen to form hydroperoxides and carbonyl groups, both of which absorb light at about 290 nm. Therefore, degradation during processing or storage can produce functional groups, which are subject to further degradation when exposed to UV light. Certain catalyst residues and unsaturation also promote photodegradation. Therefore, since the films of the invention are predicted to be inherently more stable during processing and storage, they should be less sensitive to UV light.

Table V highlights the significant difference in the molecular weight distributions of the invention and commercial Ziegler-Natta products. The resin of the invention has a narrower MWD and, at equivalent MI, has a lower $M_w$, $M_z$, and $M_{z+1}$. These differences contribute to the fact that the resins of the invention are much less likely to become highly oriented during film extrusion. Two film properties which are particularly sensitive to orientation are Elmendorf tear and shrinkage. Table I incudes cast film properties observed with two Ziegler-Natta products and one example of the films of the invention. Note that the ratio of TD tear to MD tear for the Ziegler-Natta products are 7.16:1 and 4.6:1, while the invention is considerably more balanced with a ratio of 2.8:1. Note also that the invention shrinks much less than the Ziegler-Natta film products. If one were to define a shrinkage index (SI) as (100 - TD expansion)/(100 - MD shrinkage). The SI of the two Ziegler-Natta products are 3.76 and 4.54, respectively, while the SI of the film of the invention is 2.16. Therefore, the films of the invention have a more balanced shrinkage properties.

Films produced from the present resins also have excellent optical properties. The excellent optics are most pronounced in blown film applications, as shown in Table II, which details a hexene grade. Good film optics in linear polyethylenes are often associated with copolymers which have lower density than the resins exemplified in Tables II and IV; such lower density copolymers typically have much higher film hexane extractables than the present resins. Substantial improvement in blown film optical properties, haze and gloss, was observed by blending even small amounts of LDPE. For example inclusion of 7% of a LDPE into a resin made from the process described above, and blown into film, exhibited a 60% reduction in haze and a 30% increase in gloss (specifically haze of 3.3% and gloss of 77%) over the unblended film (Table II, Resin B, 1 mil) of our invention. The very good optics of blown films made from the present resins blended with LDPE or the like will make them competitive with cast films in some applications. This combination of superior optical properties and lower extractables and the resultant lower reblock is also seen in octene grades and would be expected in other ethylene copolymer grades made from ethylene and a comonomer containing at least five carbon atoms. The enhancement is less pronounced in butene grades. Ziegler-Natta ethylene-butene copolymers have markedly lower wax content than their ethylene copolymer grades made from ethylene and a comonomer containing at least five carbon atoms.

Octene grades of the present LLDPE resins were also produced and evaluated. As with the hexene resins, the octene resins produced film with superior tensile strength, impact strength and puncture resistance than commercially available LLDPE's. They also had very low levels of reblock. Thus, anti-block agents will often not be necessary in films produced from the octene grades. The TD Elmendorf tear of the octene grades is materially better than that of the counterpart hexene grades. The octene grades also demonstrated better bubble stability during blown film processing and are somewhat more easily extrudable than the hexene grades. Details ofthe results obtained from testing an octene LLDPE of the present invention are set forth in Table IV.

The excellent tensile strength, impact strength and puncture properties of the present resins permit resin density to be raised as required to achieve the desired film stiffness and/or yield strength without reducing toughness below acceptable levels for most applications. This superior toughness/stiffness balance has significant benefit by permitting simplified film formulations for applications requiring yield strength to mitigate film stretching (as in heavy wall bags), stiffness for ease of handling (as in grocery sacks), or better machineability (as in consumer trash bags).

Another important characteristic of the films of the invention is its good hot tack strength. Hot tack is the capability of a heat seal to hold together, when pulled apart, immediately before thoroughly quenching the seal. Hot tack strength is the measure of the maximum stress that can be applied before the seal fails This is different from seal strength which is a measure of the strength of a seal after the seal has cooled. Hot tack strength, on the other hand, is the ability of a heat seal to hold together, remain intact, immediately after sealing, before the seal is cooled.

Hot tack properties are important in packaging applications. A high hot tack strength at lower temperatures allows packaging manufacturers to increase line speeds. Hot tack is also the constraining factor in determining the weight of material that can be packaged in a form-fill and seal machine. High hot tack is also advantageous in cases where bulky products tend to resist package edge sealing, where vibration or cutting takes place while the seal is hot, or where packages are filled hot. In a typical verticle form fill seal or gas flushed horizontal form fill seal process a polymer composition is formed into a flexible pouch and almost immediately filled with the contents to be packaged and then the pouch is sealed closed. Since it is often difficult or impossible to maintain commercial sealing equipment at exactly the same sealing temperature throughout a commercial run, a broader range of scaling temperatures would make it easier to assure that all heat seals are made with acceptable strength.

Hot tack was measured in accordance with the following procedures and settings on a commercial hot tack tester (DTC Hot Tack Tester Model 52-D); all films backed with 2 mil PET tape; seal force = 0.5 N/mm$^2$; seal time = 0.5 second; delay time = 0.4 second; seal width = 15 mm; and peel speed = 200 mm/second.

Heat seal strength, which is a measure of the seal strength of a seal after it has cooled, was measured on a Theller Model heat sealer. The films of the invention were not backed with tape. The procedure and settings were as follows: seal force = .517 N/mm$^2$; dwell = 1 second; seal width = 25.4 mm; and peel speed = 8.47 mm/second.

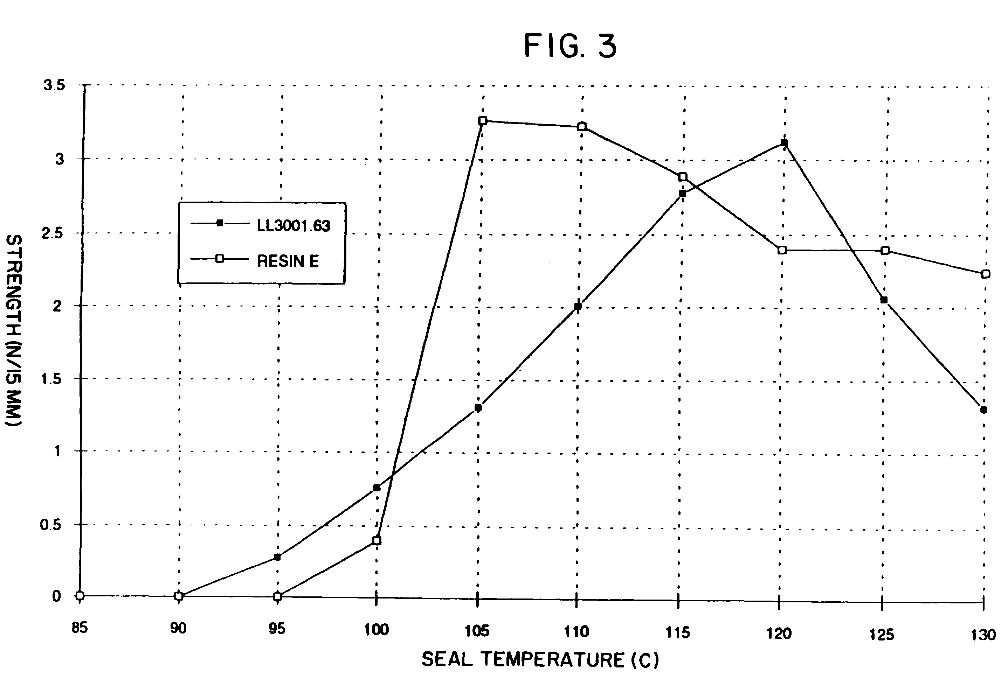

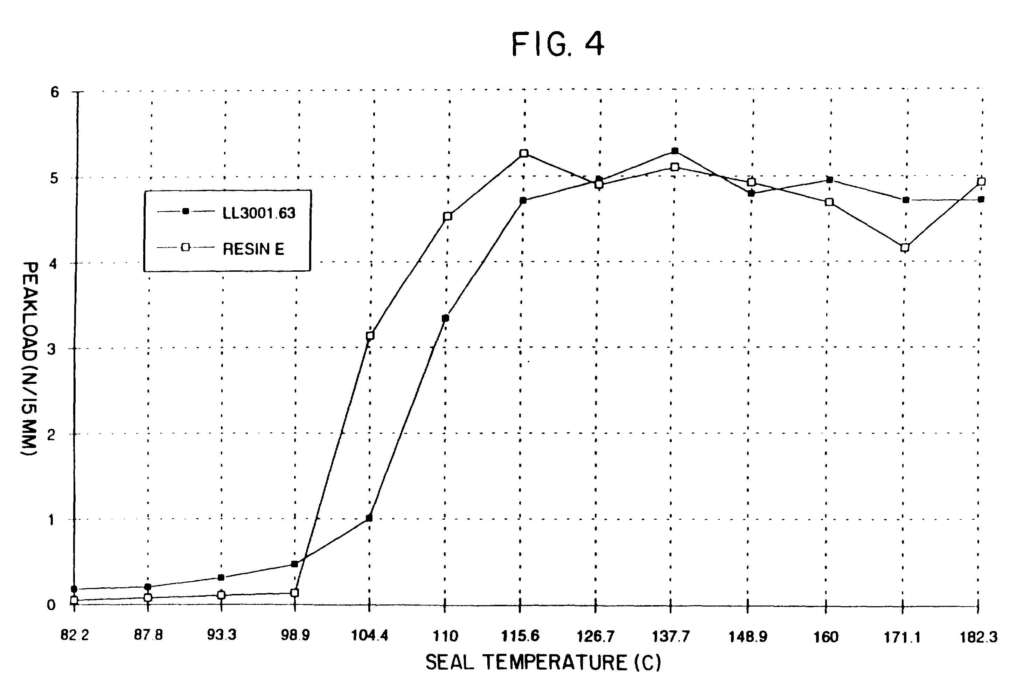

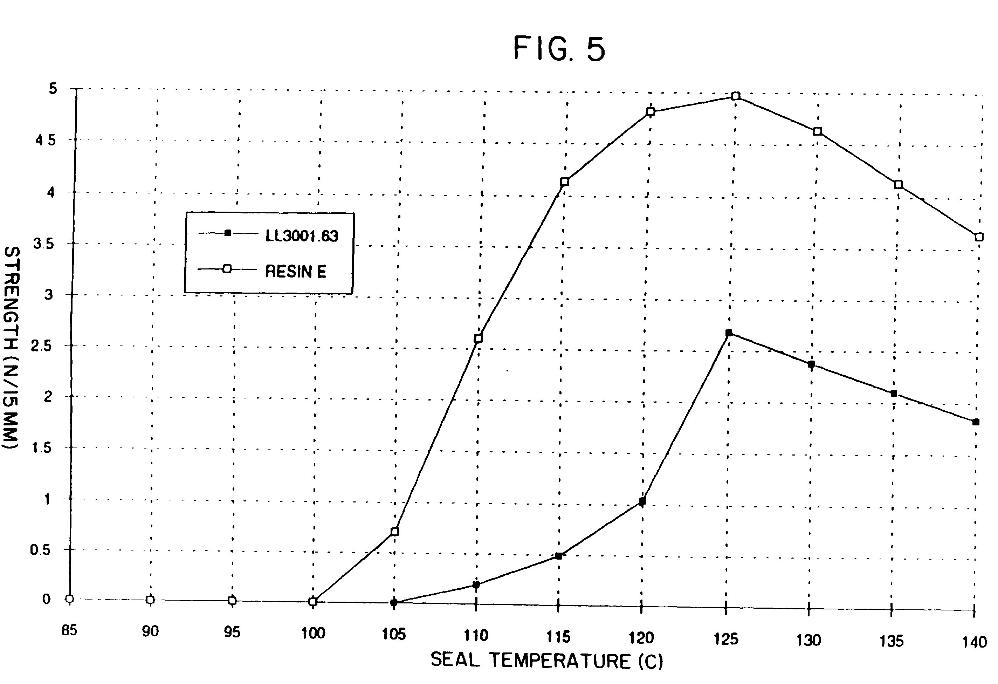

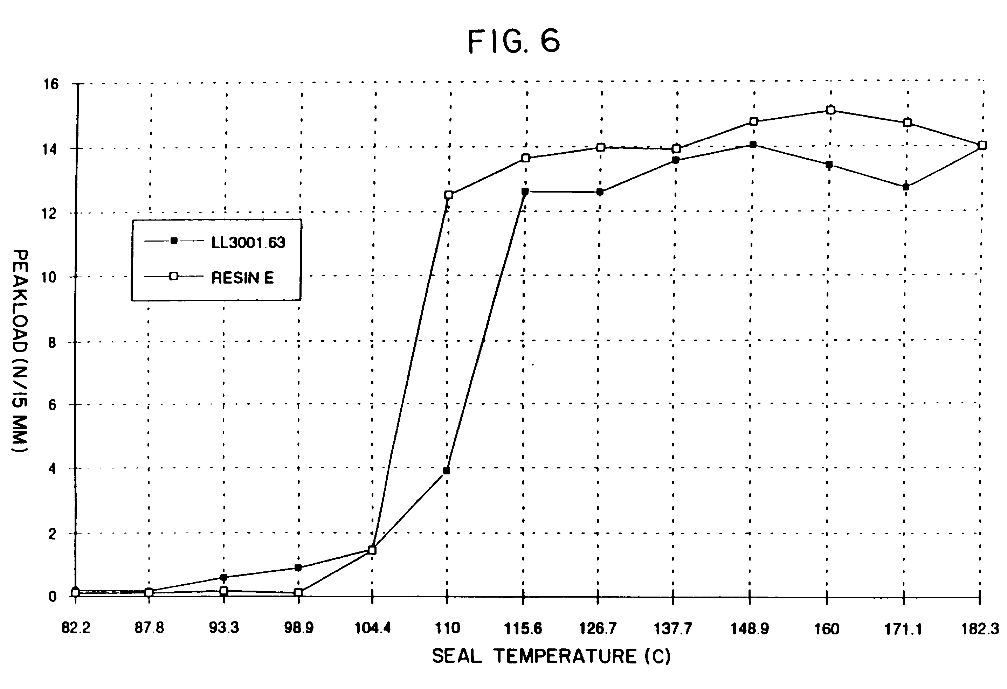

Figures 3-6 illustrate the improved hot tack strength and seal strength of the films of the invention.

Table VII illustrates that the inventive films of the invention are a better oxygen and moisture barrier than films made with traditional Ziegler-Natta catalysts. The films ofthe invention have a 12% lower oxygen transmission rate (OTR) at 0.75 mils (19.1 μm), and a 31.7% lower OTR at 2.75 mils (69.85 μm) as compared with a film trade with LL-300163 available from Exxon Chemical Company, Houston, Texas. Also, the films of the invention have a 7% lower MVTR at 0.75 mils (19.1 μm) and 17% lower WVTR at 2.75 mils (69.85 μm) than LL-3001.63.

A striking property of the films produced in accordance with this invention is their very high impact strength. Dart impact strengths above 1000 g/mil (40 g/μm may be easily obtained. Indeed, most grades at 0.918 g/cm$^3$ have dart impact strengths above 1 500 g/mil (60 g/μm). However, in our development efforts we noticed that in many instances the impact strength of our films decreased significantly with time. Some decrease would be expected since thermoplastic articles, parlicularly films, are noted for property decrease or enhancement with time for days or even months following fabrication. But the dart impact strength decrease here was more than the 10-20% often observed. This decrease was greatest for films stored outside the laboratory environment. Impact strength decrease was typically slight where the film was stored even over long periods in the laboratory. Yet in real-world conditions such as extended storage in a warehouse, impact strength generally dropped significantly. We suspected that thermal aging and processing severity were key factors.

To test this hypothesis, we produced six cast films at various conditions. These films were then subjected to stepwise thermal aging for 16, 32, 48 and 64 hours at 140°F (60°C). This caused the films to drop from dart impact strengths exceeding 1500 g/mil (60 g/μm) to dart impact strengths in the range of 100 g/mil (3.9 g/μm), preferably 200 g/mil (7.9 g/μm), more preferably greater than 250 g/mil (9.8 g/μm), still more preferably greater than 300 g/mil (11.8 g/μm), even more preferably greater than 320 g/mil (12.6 μm) end most preferably greater than 350 g/mil (13.8 g/μm) to greater than about 1500 g/mil (60 g/μm)), where they appeared to equilibrate. The other properties of the film were only modestly affected (≐20%) by the aging process. Though we do not fully understand the mechanism underlying this diminution in dart impact strength, it seems clear that it involves morphology changes such as secondary annealing or crystallization, occurring after the film is produced. The thermal history of the film is certainly a key factor. Though the decrease in dart impact strength we observed is certainly significant, it is important to keep in mind that even at about 100 g/mil (3.9 g/μm) our films still demonstrate considerably better dart impact strength than films produced from most commercially available hexene or octene LLDPE's having the same density and melt index.

This tendency of our films to undergo dart impact strength decrease with aging is related to how the film is produced as discussed above. Table VI provides the results of tests performed to determine the effect on dart impact strength of the melt curtain length and line speed of a cast film process. It is readily apparent that reducing the line speed or increasing the curtain length has the effect of increasing the dart impact strength measured after thermal aging. Thus, by increasing the curtain length, decreasing the line speed or some combination of the two, we can control the degree to which dart impact strength of cast films produced from our resins drops as a result of thermal aging. It would be expected that a similar result could be achieved for blown films by taking action to reduce processing rate and/or to extend the time period between extrusion and the frostline. Other changes in resin or processing conditions to achieve similar results would be obvious to those with skill in the art.

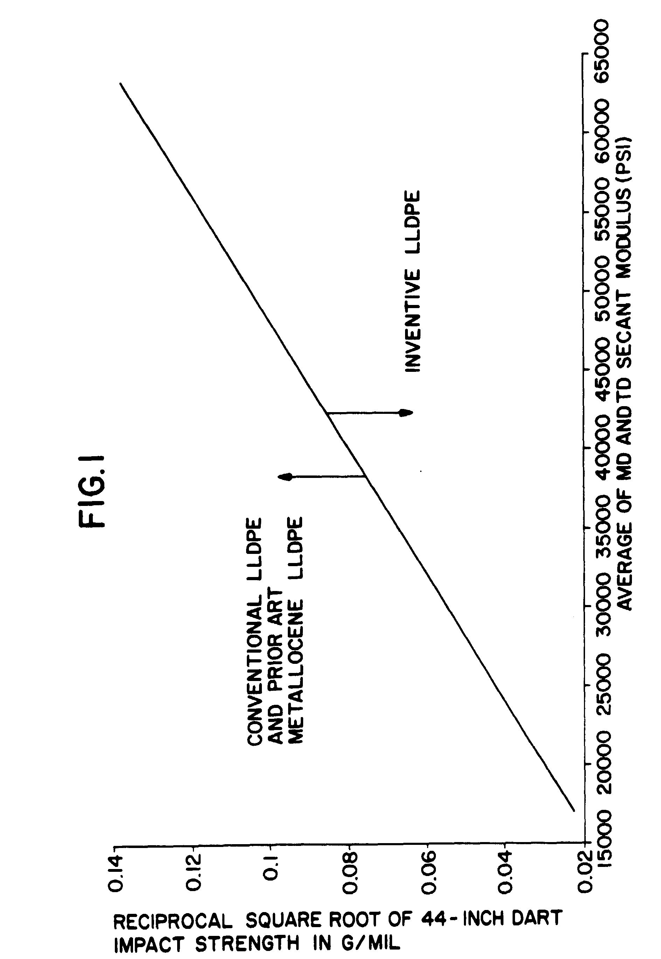

In one embodiment, the dart impact strength of a blown film of the invention is represented by the following empirical formula which is the equation for the line shown in Figure 1:

$$D^{\frac{1}{2}} \geq 1 / [(2.4927 \times 10^{-6})(M) - 0.02]$$

where D is the dart impact strength in g/mil as measured according to the following procedure:

the films are fabricated and then within about 1 day they are placed in an ASTM-controlled laboratory as specified in ASTM-D-1709; and
the dart impact $F_{50}$ value is measured according to ASTM-D-1709, method A, except that, due to the high impact value of the films a 44 inch drop height (112 cm) is used.

M is the average of the MD and TD 1% secant moduli; where each modulus is measured according to ASTM D-822 and reported in psi.

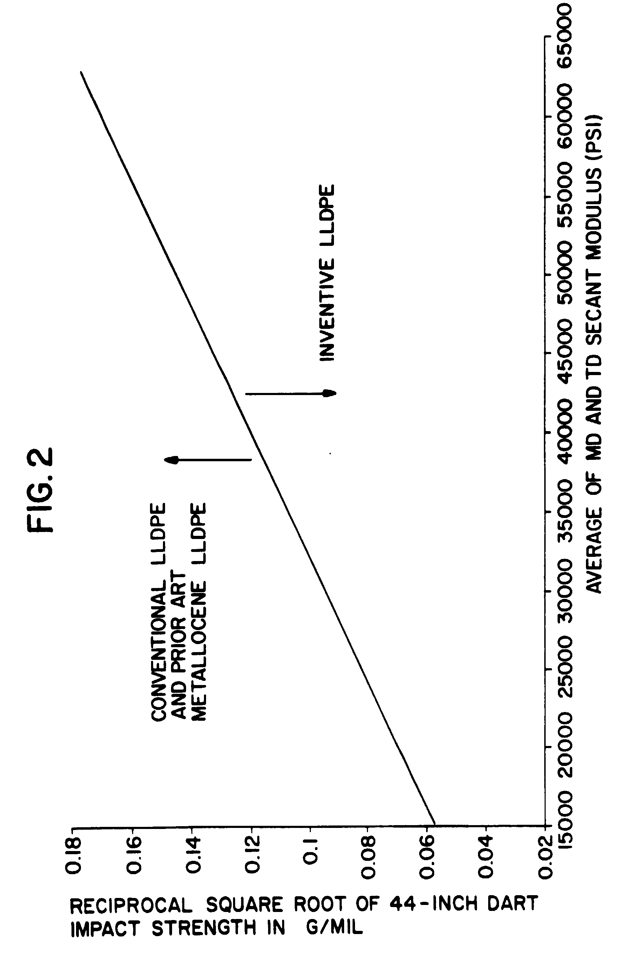

In another embodiment the dart impact strength of a cast film of the invention is represented by the following empirical formula which is the equation for the line shown in Figure 2:

$$D^{1/2} \geq 1 / [(2.4927 \times 10^{-6})(M) + 0.02]$$

where D and M are as defined above.

In one embodiment the average of the MD and TD 1% secant moduli of the films of the invention is in the range of about 15,000 psi (103,425 kPa) to about 65,000 psi (448,175 kPa), preferably 20,000 psi (137,900 kPa) to about 60,000 psi (413,700 kPa), most preferably 30,000 psi (206,850 kPa) to about 55,000 psi (379,225 kPa).

In another embodiment the average MD and TD 1% secant modulus of the films of the invention are greater than 25,000 psi (172,375 kPa), preferably greater than 35,000 psi (241,325 kPa) and even more preferably greater than 40,000 psi (275,800 kPa) and most preferably greater than 50,000 psi (344,750 kPa).

Figures 1 and 2 illustrate the fact that LLDPE films usually exhibit a trade-off between film modulus and film impact strength. The film modulus is a measure of the film's stiffness, or resistance to yielding, and it is related to both the density of the LLDPE and to the specific conditions under which the film is made. Thus, it is possible to obtain films having very different moduli from the same LLDPE, depending upon, for example, the rate at which the molten film is cooled. Those skilled in the art will therefore understand why we have chosen to express the film impact strength as a function of film modulus rather than LLDPE density.

## Specific Applications of the Resins of the Invention

The present LLDPE resins are well suited for a variety of specific applications. The superior tensile toughness, impact strength, and puncture resistance of films produced with these resins makes them very attractive for pallet wrap and other stretch film applications. In film applications where clarity is desired, these resins will be particularly desirable. This is especially so for stretch films. In blown stretch films the lower level of extractables, improved optical properties, and lower stiffness of the present resins yields improved cling, which is expected to reduce the need for tackifier additives. This not only yields a cost savings, but also reduces or eliminates the roll telescoping which sometimes occurs in highly tackified blown films.

These resins are also well suited for use in food packaging and medical applications in which a combination of toughness, puncture resistance, good optics and low extractables are desirable. This is particularly so for the hexene and octene grades where the extractables level is considerably lower than most Ziegler-Natta derived resins of common density and melt index.

Other applications of films produced from these resins include industrial liners, can liners, shipping sacks and trash can liners. For heavy duty bags, expectations are that the properties of the present resins will in some instances reduce the need for LDPE or HDPE blending or coextrusion to achieve a desired mix of puncture resistance, impact strength, and stiffness. As discussed previously, the excellent tensile and impact strengths of films produced from our resins permit resin density to be increased as required to achieve a high level of yield strength to inhibit film stretching. This is particularly desirable for heavy duty bags. Also, these resins allow film downgauging, reduced draw resonance and increased line speed.

There are many other potential applications of films produced from the present resins. The low reblock levels of these films make them desirable for low-noise stretch films. Films include blown or cast films in mono-layer or multilayer constructions formed by extrusion, coextrusion, or by lamination. Such films are useful as shrink film, cling film, stretch film, sealing films, oriented films, freezer films, snack packaging, heavy duty bags, grocery sacks, baked and frozen food packaging medical packaging, industrial liners, diaper backsheets, produce bags, laminating films, membranes, such as geomembranes, etc. in food-contact and non-food contact applications and agricultural and greenhouse films. The resins will also find applicability in extrusion coating and laminating operations.

In many applications it will be desirable to use the present resins to produce single layer films. The combination of low reblock, good optics, high strength and toughness of these single layer films will make them more desirable than existing monolayer films and perhaps competitive in many applications with multi-layer films of the prior art.

The films of our invention can contain anti-oxidants, slip, anti-block, processing aids, pigments, UV inhibitors, anti-static agents, or other additives as required for the application with out substantially departing from the scope of our invention.

The present resins can also be employed in multi-layer films. In some applications they will be desirable as the skin layer in coextruded films to impart enhanced clarity, blocking resistance and cling performance to the final film. In other applications they will be used as the core layer, taking advantage of their toughness and puncture resistance.

While film is likely the single most important application of the present resins, they have other uses. Certain grades of the present resins will be useful in producing plastic sheeting, injection molding, rotomolding and other processes.

The LLDPE of the present invention can be blended with additives and other ingredients known to those of ordinary skill in the art such as fillers, antioxidants, tackifiers, UV stabilizers, heat stabilizers, pigments, dyes, waxes, silica, talc and the like. It is also possible to add peroxides and other free radical generators to the inventive LLDPE's in order to modify their rheological properties.

In addition, the LLDPE's of the present invention can be modified by blending with other polymers. It is well known in the prior art to add various other polymers to LLDPE in order to obtain improved performance. For example, polymers can be added to improve the processing characteristics of the LLDPE and/or the properties of films made from the LLDPE. Such film properties may include stiffness, cling, clarity, gloss, adhesion to substrates, cutting characteristics, sealing characteristics, coefficient of friction, tensile strength, MD and TD tear strength impact strength, puncture resistance, blocking tendency, surface characteristics, shrinkage characteristics, low temperature flexibility, gas and moisture permeability, other properties. Generally the property improvements represent increases in the level of the particular film property, but sometimes blending is done to achieve lower property levels, such as, for example, lower tear resistance in order to impart good openability to packages made from the films.

Polymers suitable for blending with the inventive LLDPE include, but are not limited to, polyolefins such as polypropylene and ethylene propylene copolymers, VLDPE, plastomers, LDPE, EVA, EMA, copolymers of acrylic acid, polymethylmethacrylate or any other polymers polymerizable by a high-pressure free radical process, PVC, polybutene-1, isotactic polybutene, ABS resins, elastomers such as ethylene-propylene rubber (EPR), vulcanized EPR, EPDM, block copolymer elastomers such as SBS and the like, nylons, polycarbonates, PET resins, crosslinked polyethylene, copolymers of ethylene and vinyl alcohol (EVOH), polymers of aromatic monomers such as polystyrene, poly-1 esters, high molecular weight HDPE, low molecular weight HDPE, graft copolymers generally, polyacrylonitrile homopolymer or copolymers, thermoplastic polyamides, polyacetal, polyvinylidene fluoride and other fluorinated elastomers, polyethylene glycols, polyisobutylene (PIB), hydrocarbon resins, terpene resins, and other tackifying polymers, and numerous others and combinations thereof.

The very high dart impact strength of the present resins permits significant addition of LDPE while retaining acceptable dart impact strength. Somewhat surprisingly, creating blends of 80-99% of our present LLDPE resin with 20-1% LDPE provides blown films having a clarity which can approach that of current LDPE high clarity packaging grade films or cast films.

We have found that blends of the inventive LLDPE and HMW-HDPE provide particularly advantageous results. Specifically, the addition of HDPE results in improved TD Elmendorf tear, better optical properties, and better processability, especially better bubble stability and better tensiles. The preferred HDPE's have a density of 0.940 g/cm$^3$ or greater, preferably 0.950 g/cm$^3$ or greater, and have polymer chains that contain at least about 20,000 carbon atoms. The HDPE may be either a homopolymer or a copolymer of ethylcne. Preferred comonomers include a C$_2$ to C$_{20}$ alpha-olefin, whether cyclic, linear or branched. Particular examples include propylene, butene, pentene, hexene, heptene, octene, nonene, decene dodecene, 3-methyl-pentene-1, 3,5,5-trimethylhexene-1 and the like.

A particularly preferred HDPE has a bimodal molecular weight distribution and at least one of the modes has a weight average molecular weight of at least about 300,000.

The amount of HDPE required to achieve improvement is partially related to the molecular weight of the HDPE. If a higher molecular weight HDPE is chosen, less of the HDPE is required to achieve desired improvements in properties or processability, while somewhat larger amounts of lower molecular weight HDPE are required to achieve similar improvements.

The advantages of the HDPE addition to the inventive LLDPE's were illustrated by forming blends of the polymers shown in Table VIII below. The blends were blown into films using a 3.5 inch (8.9 cm) extruder and the standard conditions outlined in Table IX. The blends were also extruded into cast films. The extrusion conditions used a cast film line are summarized in Table X. The data are reported in Tables X4-X10.

In the case of HDPE B, available as HD7000F from Exxon Chemical Company, Houston, Texas, experiments were conducted at 3 weight percent HDPE using dry blended as well as melt homogenized blends. Two methods of addition were used to dry blend HDPE B. In Method 1 the dry blend of HDPE B and LLDPE G of the invention was allowed to fill the extruder hopper and was therefore constantly stirred by the stirring paddle in the hopper. This stirred dry pellet blend was fed continuously to the extruder feed section. In Method 2 a starve-feed approach was used where the dry pellet blend composition was fed in a cascade manner so that the extruder hopper was never filled and no stirring and pellet segregation was possible. In both methods the calibration of the blending equipment was rechecked and found to be very accurate. Melt blending was accomplished using a twin-screw, starved-fed extruder. HDPE C is available as HD9856B from Exxon Chemical Company, Houston, Texas.

The resin and product properties recited in this specification were determined in accordance with the following test procedures Where any of these properties is referenced in the appended claims, it is to be measured in accordance with the specified test procedure except the dart impact strength is measured as previously described with respect to Figures 1 and 2.

| Property | Units | Procedure | Full Title |
|---|---|---|---|
| Melt Index | dg/min | ASTM D-1238(E) | 1 |
| Density | g/cc | ASTM D-1505 | 2 |
| Haze | % | ASTM D-1003 | 3 |
| Gloss @ 45° | % | ASTM D-2457 | 4 |
| Tensile @ Yield | psi | ASTM D-882 | 5 |
| Elongation @ Yield | % | ASTM D-882 | 5 |
| Tensile @ Break | psi | ASTM D-882 | 5 |
| Elongation @ Break | % | ASTM D-882 | 5 |
| 1% Secant Modulus | kpsi | ASTM D-882 | 5 |
| Dart Impact Strength | g/mil | ASTM D-1709 | 6 |
| Elmendorf Tear Resistance | g/mil | ASTM D-1922 | 7 |
| Puncture Force | lb/mil | ASTM D-3763 | 8 |
| Puncture Energy | in-lb/mil | ASTM D-3763 | 8 |
| Puncture Propagation Tear Resistance (PPT) | kgf | ASTM D-2582 | 9 |
| Total Energy Impact | ft-lb | ASTM D-4272 | 10 |
| Reblock | g | ASTM D-3334 | 11 |

1. Flow rates of thermoplastics by extrusion plastometer
2. Density of plastics by the density-gradient technique
3. Haze and luminous transmittance of transparent plastics
4. Specular gloss of plastic films
5. Tensile properties of thin plastic sheeting
6. Impact resistance of polyethylene film by the free-falling dart method
7. Propagation tear resistance of plastic film and thin sheeting by pendulum method
8. High-speed puncture properties of plastics using load and displacement sensors
9. Puncture-propagation tear resistance of plastic film and thin sheeting
10. Impact Resistance of Plastic Film by Instrumented dart drop
11. Blocking load of plastic film by the parallel plate method

In accordance with ASTM procedures, the film properties reported herein were measured in a laboratory environment except as otherwise noted. The MI swell is the ratio of maximum MI strand diameter to the MI orifice diameter.

For the purposes of this patent specification and appended claims, dart impact is measured in accordance with ASTM procedure D-1709, Method A except those figures, tables and claims relating to the formulas as previously discussed.

All priority documents and references mentioned herein, including testing procedures, are incorporated by reference.

As is apparent from the foregoing description, the materials prepared and the procedures followed relate to specific embodiments of the broad invention. It is apparent from the foregoing general description and the specific embodiments that, while forms of the invention have been illustrated and described, various modifications can be made without departing from the spirit and scope of this invention. Accordingly, it is not intended that the invention be limited thereby.

Those skilled in the art will appreciate that the present resins have applications and advantages beyond those expressly set forth herein. The coverage of this patent is limited only as set forth in the appended claims.

TABLE I

| CAST FILM EVALUATION HEXENE LLDPE | | | |
|---|---|---|---|
| Line speed = 1000 ft/min (305m/min)<br>Curtain length = 3.5 inches (8.9 cm) | | | |
| Sample ID | Exxon Escorene LL-3003 | Exxon Escorene LL-3002 | Resin A |
| Resin Properties: | | | |
| MI dg/min. | 2.97 | 2.00 | 3.17 |
| Density, g/cc | 0.9219 | 0.9217 | 0.9188 |
| MIR ($I_{21}/I_2$) | 29.0 | 27.9 | 16.9 |
| MI Swell | 1.12 | 1.12 | 1.08 |
| Film Properties: | | | |
| Gauge, mil (μm) | 0.84 (21.3) | 0.82 (20.8) | 0.81 (20.6) |
| Haze, % | 1.4 | 1.7 | 1.4 |
| Gloss, % at 45° | 87 | 86 | 86 |
| Tensile @ Break, psi (MPa)        MD | 8930 (61.6) | 9010 (62.2) | 9850 (68.0) |
| TD | 5280 (36.4) | 5760 (39.7) | 7270 (50.2) |
| Elong. @ Break %        MD | 420 | 370 | 410 |
| TD | 790 | 800 | 650 |
| 1% Sec. modulus, Kpsi(MPa)        MD | 22.5 (155) | 21.6 (149) | 16.5 (114) |
| TD | 23.8 (164) | 23.7 (163) | 18.8 (130) |
| Elmendorf Tear, g/mil(g/μm)        MD | 159 (6.2) | 223 (8.7) | 228 (8.9) |
| TD | 1139 (44.4) | 1026 (40.0) | 639 (24.9) |
| Dart Impact, g/mil(g/μm) | 90 (3.5) | 90 (3.5) | 1660 (65.4) |
| Shrinkage, %        MD | 67 | 72 | 50 |
| TD | -24 | -27 | -8 |
| Tensile @ Yield, psi(Mpa)        MD | 1100 (7.6) | 1130 (7.8) | 940 (6.5) |
| TD | 1110 (7.6) | 1140 (7.9) | 850 (5.9) |
| Elongation @ Yield, %        MD | 6 | 7 | 7 |
| TD | 6 | 6 | 6 |
| MD Tensile @ 200% elongation, psi(MPa) | 2240 (15.5) | 2650 (18.3) | 2300 (15.9) |
| TE Impact, Ft-lbs (J)        20°C | 1.40 (1.90) | 1.91 (2.59) | 2.44 (3.31) |
| -34°C | 0.56 (.76) | 0.60 (.81) | 1.05 (1.42) |
| Puncture Force, lbf/mil (N/μm) | 10.5 (1.84) | 10.9 (1.91) | 13.7 (2.40) |
| Puncture Energy, in-lbs/mil        (mJ/μm) | 36.2 (161) | 36.9 (164) | 45.6 (203) |

Film was not thermally aged before testing. Film was produced and immediately stored in a laboratory consistent with ASTM requirements before testing. Dart impact was measured in accordance with ASTM-D-1709, Method A.

TABLE II

| BLOWN FILM EVALUATION HEXENE-LLDPE | | | | |
|---|---|---|---|---|
| Blow-up ratio = 2.5; Die gap = 90 mil (2.3 mm); Output rate = 10 LBS/hr/inch of die circumference(1.8 kg/br/cm of die circumference) | | | | |
| Resin | Exxon Escorene LL-3001.44 (contains 3000 ppm talc as antiblock) | | Resin B | |
| Target thickness | 1.0 mil | 0.75 mil | 1.0 mil | 0.75 mil |
| | | | | |
| MI/Density (dg/min./g/cm$^3$) | 1.0/.918 | 1.0/.918 | 0.97/.9188 | 0.97/.9188 |
| Haze, % | 21.9 | 22.5 | 10.3 | 10.0 |
| Gloss @ 45° | 31 | 33 | 54 | 50 |
| Tensile @ yield, N/cm$^2$ MD | 1034 | 1020 | 903 | 934 |
| TD | 1131 | 1145 | 924 | 931 |
| psi (MPa) MD | 1500 (10.3) | 1480 (10.2) | 1310 (9.0) | 1354 (9.3) |
| TD | 1640 (11.3) | 1660 (11.4) | 1340 (9.2) | 1350 (9.3) |
| Elongation @ yield, % MD | 6 | 6 | 6 | 6 |
| TD | 6 | 6 | 6 | 6 |
| Tensile @ break, N/cm$^2$ MD | 6302 | 6274 | 6357 | 7102 |
| TD | 4416 | 4337 | 5737 | 6102 |
| psi (MPa) MD | 9140 (63.0) | 9100 (62.8) | 9220 (63.6) | 10300 (71.0) |
| TD | 5970 (41.2) | 6290 (43.4) | 8320 (57.4) | 8850 (61.0) |
| Elongation @ break, % MD | 540 | 480 | 520 | 490 |
| TD | 640 | 690 | 570 | 560 |
| | | | | |
| 1% secant modulus, psi (MPa) MD | 36000 (248) | 38200 (263) | 32100 (221) | 27300 (188) |
| TD | 43300 (299) | 44100 (304) | 29100 (201) | 29100 (201) |
| Elmendorf tear, gms MD | 355 | 302 | 354 | 331 |
| TD | 822 | 605 | 450 | 390 |
| gms/mil (gms/μm) MD | 355 (14.0) | 383 (15.1) | 254 (10.0) | 414 (16.3) |
| TD | 822 (32.4) | 775 (30.5) | 428 (16.9) | 482 (19.0) |
| Dart impact, gms | 194 | 152 | 1437+ | 1437+ |
| gms/mil (gms/μm) | 185 (7.28) | 177 (6.97) | 1437+ (57+) | 1437+ (57+) |
| MD tensile @ 200% elongation, psi (MPa) | 2198 (15.6) | 2413 (16.6) | 1914 (13.2) | 2065 (14.2) |

TABLE II (continued)

| BLOWN FILM EVALUATION HEXENE-LLDPE | | | | |
|---|---|---|---|---|
| Resin | Exxon Escorene LL-3001.44 (contains 3000 ppm talc as antiblock) | | Resin B | |
| Target thickness | 1.0 mil | 0.75 mil | 1.0 mil | 0.75 mil |
| Puncture force, lbf/mil N/μm) | 5.8 (1.01) | 6.2 (1.09) | 10.1 (1.77) | 9.0 (1.58) |
| Puncture force energy, in-lbs/mil (mJ/μm) | 11.6 (51.6) | 13.0 (57.8) | 29.4 (131) | 25.5 (113) |
| Gauge, mils (μm) Average | 1.04 (26.4) | .76 (19.3) | 1.06 (26.9) | 0.77 (19.6) |
| High | 1.16 (29.5) | .88 (22.3) | 1.20 (30.5) | 0.85 (21.6) |
| Low | 0.92 (23.4) | .67 (17.0) | 0.96 (24.4) | 0.67 (17.0) |
| Reblock, gms | 136 | 141 | 100 | 74 |

Exxon Escorene grade LL-3001.44 contains about 5000 ppm talc antiblock. Resin B does not. Accordingly, care must be taken in comparing properties which will be affected by the presence of antiblock. Film was not thermally aged before testing. Film was produced and immediately stored in a laboratory consistent with ASTM requirements before testing. Dart Impact was measured in accordance with ASTM-D-1709, Method A.

TABLE III

| Conditions Under Which Example Resins Were Produced Using Fluidized Bed Gas-Phase Polymerization | | | | | | |
|---|---|---|---|---|---|---|
| | Resin M | Resin N | Resin O | Resin P | Resin Q | Resin R |
| | | | | | | |
| Density (g/cm$^3$) | .9136 | .9054 | .9079 | .9154 | .9067 | .9189 |
| Melt Index (dg/min.) | 3.03 | 3.91 | 1.55 | 0.96 | .43 | .86 |
| Ethylene (mole%) | 35.0 | 35.0 | 35.0 | 60 | 59.3 | 60 |
| Butene (mole%) | 3.00 | 4.40 | 3.60 | - | - | - |
| $C_4/C_2$ | .086 | .126 | .103 | - | - | - |
| Hexene | - | - | - | 1.67 | 2.17 | 1.67 |
| $C_6/C_2$ | - | - | - | .028 | .037 | .028 |
| $H_2$ (ppm) | 137 | 166 | 111 | 135 | 103 | 82 |
| Temp. of Fluidized Bed (C°) | 80 | 79 | 77 | 79 | 80 | 74 |
| Gas Velocity (mps) | .42 | .47 | .52 | .52 | .52 | .43 |
| Reactor Pressure (MPa) | 2.1 | 2.1 | 2.1 | 2.1 | 2.1 | 2.1 |

Catalyst efficiency varied within the range of 2500 - 6000 gms PE/gm supported catalyst. TEAL was used as the scavenger in amounts ranging from 70-150 ppm.

TABLE IV

| BLOWN FILM EVALUATION OCTENE-LLDPE | | | |
|---|---|---|---|
| Blow-up ratio = 2.5; Die gap = 90 mil (2.3 mm); Output rate = 10 LBS/hr/inch of die circumference(1.8 kg/hr/cm of die circumference) | | | |
| Resin Target thickness | Exxon Escorene LL-3001.44 | Resin B Hexene - LLDPE | Resin H Octene - LLDPE |
| | | | |
| MI/Density (dg/min./g/cm$^3$) | 1.0/.918 | 0.97/.9188 | 1.09/.9201 |

TABLE IV (continued)

| BLOWN FILM EVALUATION OCTENE-LLDPE | | | |
|---|---|---|---|
| Resin<br>Target thickness | Exxon Escorene LL-3001.44 | Resin B Hexene - LLDPE | Resin H Octene - LLDPE |
| Haze, % | 27.8 | 10.0 | 14.2 |
| Gloss @, 45° | 24.0 | 50 | 39.3 |
| Tensile @ yield, N/cm$^2$        MD | 1010 | 904 | 1014 |
| TD | 1115 | 923 | 1029 |
| psi (MPa)        MD | 1466 (10.1) | 1311(9.0) | 1471(10.1) |
| TD | 1617 (11.2) | 1339 (9.2) | 1492 (10.3) |
| Elongation @, yield %        MD | 5.6 | 6.03 | 6.1 |
| TD | 5.29 | 5.69 | 5.67 |
| Tensile @, break, N/cm$^2$ MD | 5433 | 6360 | 6139 |
| TD | 3932 | 5735 | 5596 |
| MD | 7880 (54.3) | 9224 (63.6) | 8904 (61.4) |
| TD | 5702 (39.3) | 8318 (57.4) | 8116 (56.0) |
| Elongation @, break, %        MD | 536 | 517 | 557 |
| TD | 656 | 574 | 581 |
| 1% secant modulus, psi (MPa) MD | 36,950 (255) | 27,520 (190) | 34,150 (236) |
| TD | 45,000 (310) | 29,100 (201) | 37,150 (256) |
| Elmendorf tear, gms        MD | 352 | 354 | 381 |
| TD | 802 | 450 | 651 |
| gms/mil (gms/μm) MD | 342 (13.5) | 354 (13.9) | 343 (13.5) |
| TD | 818 (32.2) | 428 (16.9) | 587(23.1) |
| Dart impact,        gms | 193 | >1437(57+) | >1437 (57+) |
| gms/mil (gms/μm) | 179 (7.0) | >1437(57+) | >1437 (57+) |
| MD tensile @, 200% elongation, psi (MPa) | 1889 (13.0) | 1914 (13.2) | 1994 (13.8) |
| TD tensile @, 200% elongation, psi (MPa) | 1617 (11.2) | 1708 (11.8) | 1768 (12.2) |
| Puncture force, lbs/mil        (N/μm) | 5.65(0.99) | 10.1(1.77) | 7.42(1.30) |
| Puncture energy, in-lbs/mil (mJ/μm) | 12.1(33.8) | 29.4(131) | 18.0(80.0) |
| Gauge, mils (μm)        Average | 1.08 (27.4) | 1.06 (26.9) | 1.10(27.9) |
| High | 1.20 30.5) | 1.20 (30.5) | 1.29 (32.8) |
| Low | 0.96 (24.4) | 0.96(24.4) | 0.94 (23.9) |
| Reblock, gms | 64.9 | 100.2 | 46.5 |

Exxon Escorene grade LL-3001.44 contains about 5000 ppm talc antiblock. Resins B and H contain no antiblock. Thus, care should be taken in comparing properties of the resins which could be affected by the presence or absence of antiblock. Film was not thermally aged before testing. Film was produced and immediately stored in a laboratory consistent with ASTM requirements before testing. Dart impact was measured in accordance with ASTM-D-1709, Method A.

**TABLE V**

**COMPARISON OF $M_w$, $M_z$ and $M_{z+1}$ and CDBI**

| Product | Catalyst Family | Process | MI | Density (g/cc) | Comonomer | $M_w$ (x $10^{-3}$) | $M_z$ (x $10^{-3}$) | $M_{z+1}$ (x $10^{-3}$) | $M_z/M_w$ | $M_{z+1}/M_w$ | CDBI | % Hexene Extract |
|---|---|---|---|---|---|---|---|---|---|---|---|---|
| Resin A | Supp. Metallocene | Gas Phase | 3.17 | 0.9188 | C6 | 73.2 | 121.8 | 177.2 | 1.66 | 2.42 | 64 | 0.48/0.48 |
| Resin B | " | " | 0.97 | 0.919 | C6 | 101.3 | 172.1 | 257.3 | 1.70 | 2.54 | 63 | 0.30/0.30 |
| Resin C | " | " | 0.9 | 0.929 | C6 | 107.2 | 196.0 | 308.2 | 1.83 | 2.88 | 62 | 0.39/0.37 |
| Resin D | " | " | 0.65 | 0.922 | C6 | 116.2 | 210.1 | 327.6 | 1.81 | 2.82 | 62 | 0.24/0.28 |
| Resin E | " | " | 0.89 | 0.919 | C6 | 110.5 | 204.2 | 341.1 | 1.85 | 3.09 | -- | -- |
| Resin F | " | " | 2.9 | 0.9174 | C6 | -- | -- | -- | -- | -- | -- | -- |
| Resin G | " | " | 0.83 | 0.920 | C6 | -- | -- | -- | -- | -- | -- | -- |
| Resin H | " | " | 1.09 | 0.920 | C8 | 100 | 186.5 | 303.7 | 1.83 | 3.99 | -- | -- |
| Exact 3011 | Unsupp. Metallocene | High Pressure | 1.05 | 0.911 | C6 | 103.4 | 168.0 | 248.3 | 1.62 | 2.40 | -- | -- |
| Exact 2006 | " | " | 30.6 | 0.924 | C4 | 41.4 | 73.5 | 106.0 | 1.77 | 2.56 | -- | -- |
| Exp - 070 | " | " | 2.4 | 0.920 | C6 | 81.0 | 133.1 | 188.6 | 1.64 | 2.33 | 94 | -- |
| Exp - 060 | " | " | 1.4 | 0.920 | C6 | 93.3 | 150.8 | 213.8 | 1.62 | 2.29 | 95 | -- |
| Dowlex 2045 | Ziegler-Natta | Solution | 1.0 | 0.92 | C8 | 119.7 | 378.4 | 800.5 | 3.16 | 6.69 | 56 | -- |
| Dowlex 2045.02 | " | " | 1.0 | 0.92 | C8 | 101.2 | 313.8 | 696.0 | 3.10 | 6.88 | -- | -- |
| Dowlex 2045A | " | " | 1.0 | 0.92 | C8 | 112.3 | 351.3 | 694.7 | 3.13 | 6.19 | -- | -- |
| Dowlex NG | " | " | 1.0 | 0.92 | C8 | 114.6 | 360.9 | 717.8 | 3.15 | 6.26 | 52 | -- |
| Mobil NTX-101 | " | Gas Phase | 0.9 | 0.919 | C6 | 118.2 | 312.9 | 583.4 | 2.65 | 4.94 | 23 | -- |
| Escorene LD-108 | Peroxide | High Pressure | 2.0 | 0.923 | -- | 73.0 | 166.7 | 301.7 | 2.28 | 4.13 | 80 | -- |
| Escorene LD-411 | " | " | 2.25 | 0.921 | -- | 81.4 | 238.5 | 528.7 | 2.93 | 6.49 | 78 | -- |
| Escorene LD-134 | " | " | 1.95 | 0.922 | -- | 76.2 | 191.6 | 372.4 | 2.51 | 4.89 | 81 | -- |
| Escorene LL-3001 | Ziegler-Natta | Gas Phase | 0.9 | 0.919 | C6 | 116.4 | 342.7 | 655.5 | 2.94 | 5.63 | 20 | -- |
| Escorene LL-3003 | " | " | 3.2 | 0.919 | C6 | 80.7 | 242.3 | 518.6 | 3.00 | 6.42 | 34 | -- |
| Escorene LL-3003 | " | " | 4.3 | 0.920 | C6 | 74.6 | 232.0 | 505.1 | 3.11 | 6.77 | 45 | -- |
| Escorene LL-3003 | " | " | 3.9 | 0.919 | C6 | 76.7 | 227.4 | 473.4 | 2.96 | 6.17 | 56 | -- |
| Escorene LL-3003 | " | " | 3.6 | 0.920 | C6 | 78.5 | 232.8 | 506.0 | 2.96 | 6.44 | 34 | -- |

Table VB

| | Product | |
|---|---|---|
| | **Resin Y** | **Resin Z** |
| Catalyst Family | Supported Metallocene | Zigler-Natta |
| Film Gauge (mils) | 3.00 (76.2 μm) | 3.00 (76.2 μm) |
| ppm Slip (erucamide) | 800 | 1,000 |
| ppm antiblock (talc) | 4,000 | 5,000 |
| MI (g/cc) | 0.84 | 1.00 |
| Density | 0.9201 | 0.9215 |
| Cx (g/mil) | Hexene | Hexene |
| Dart Impact (psi) | - | - |
| Average Modulus | - | - |
| Mw | 108,200 | 114,800 |
| Mz | 191,200 | 350,200 |
| Mz+1 | 297,700 | 733,600 |
| Mz/Mw | 1.76 | 3.05 |
| Mw/Mn | 2.5 | 5.32 |
| CDBI | 64 | 37 |
| Film COF | 0.06 | 0.08 |
| % Hexane Extractables | - | 2.80/2.82* |

*Extractables measured on 1.5 mil (38.1 μm) film

Table VI

| PROPERTIES OF CAST FILMS PRODUCED AT DIFFERENT LINE SPEEDS AND CURTAIN LENGTHS | | | | | | |
|---|---|---|---|---|---|---|
| All films were produced utilizing the same ethylene-hexene LLDPE copolymer of the present invention. Aging conducted at 60°C for 64 hours and then the film was stored in laboratory consistent with ASTM requirements prior to testing. | | | | | | |
| Curtain Length (cm) | 7.62 | | | 15.2 | | |
| Line Speed (MPM) | 152 | 229 | 305 | 152 | 229 | 305 |
| | | | | | | |
| Gauge μm | 22.4 | 22.1 | 21.1 | 21.6 | 20.6 | 21.3 |
| | | | | | | |
| Haze % | 1.4 | 2.3 | 1.9 | 2.3 | 2.2 | 3.1 |
| | | | | | | |
| Gloss at 45° | 84 | 92 | 95 | 90 | 88 | 89 |
| | | | | | | |
| Tensile @ Break,MPa     MD | 70.3 | 71.7 | 69.0 | 63.2 | 63.7 | 66.0 |
| TD | 45.7 | 44.2 | 48.0 | 47.9 | 44.5 | 48.8 |
| | | | | | | |
| Elongation @, Break %     MD | 430 | 400 | 380 | 470 | 450 | 400 |

Table VI   (continued)

| PROPERTIES OF CAST FILMS PRODUCED AT DIFFERENT LINE SPEEDS AND CURTAIN LENGTHS | | | | | | |
|---|---|---|---|---|---|---|
| Curtain Length (cm) | 7.62 | | | 15.2 | | |
| Line Speed (MPM) | 152 | 229 | 305 | 152 | 229 | 305 |
| TD | 610 | 640 | 660 | 610 | 620 | 650 |
| | | | | | | |
| 1% Secant Modulus MPa        MD | 117 | 120 | 120 | 117 | 117 | 119 |
| TD | 132 | 133 | 140 | 130 | 137 | 129 |
| | | | | | | |
| Elmendorf Tear g/µm        MD | 9.8 | 7.7 | 9.1 | 13.2 | 8.7 | 9.4 |
| g/µm        TD | 22.6 | 22.0 | 24.4 | 20.5 | 26.4 | 24.0 |
| | | | | | | |
| Dart Impact,        g/µm | 29.3 | 20.9 | 12.6 | 59+ | 37.8 | 19.3 |
| | | | | | | |
| Shrinkage %        MD | 47 | 52 | 53 | 43 | 45 | 45 |
| TD | -9 | -10 | -11 | -3 | -10 | -9 |
| | | | | | | |
| Tensile @, Yield, MPa        MD | 7.30 | 7.44 | 7.65 | 7.03 | 7.10 | 7.37 |
| TD | 7.17 | 6.96 | 7.17 | 6.82 | 7.03 | 7.10 |
| | | | | | | |
| Elongation @ Yield, %        MD | 7 | 7 | 7 | 7 | 7 | 7 |
| TD | 6 | 6 | 6 | 6 | 6 | 6 |
| | | | | | | |
| MD Tensile @ 200% Elongation, MPa        MD | 16.1 | 17.2 | 18.2 | 13.6 | 14.4 | 16.8 |
| | | | | | | |
| Puncture force,        N/µm | 1530 | 1410 | 1460 | 1340 | 1470 | 1490 |
| Puncture energy,        mJ/µm | 205 | 184 | 185 | 182 | 196 | 193 |
| | | | | | | |

Dart impact was measured in accordance with ASTM-D-1709, Method A.

Table VII

| Blown Film Evaluation Hexene-LLDPE | | | | |
|---|---|---|---|---|
| Blow-up ratio = 2.5; Die gap = 60 mil (1.52 mm) Output rate = 10 LBS/hr/inch of die circumference (1.8 kg/hr/cm of die circumference) | | | | |
| Resin | Exxon Escorene LL-3001.63 | | Resin E | |
| Target thickness | 3.0 mil | 0.75 mil | 3.0 mil | 0.75 mil |
| | | | | |
| MI/Density        (dg/min./g/cm$^3$ | 0.96/.919 | 0.96/.919 | 0.89/.919 | 0.89/.919 |
| | | | | |
| Haze % | 22.3 | 13.3 | 14.5 | 10.9 |

Table VII   (continued)

| Blown Film Evaluation Hexene-LLDPE | | | | |
|---|---|---|---|---|
| Resin | Exxon Escorene LL-3001.63 | | Resin E | |
| Target thickness | 3.0 mil | 0.75 mil | 3.0 mil | 0.75 mil |
| Gloss @ 45° | 35 | 42 | 36 | 47 |
| | | | | |
| Tensile @ yield,     N/cm$^2$     MD | 952 | 993 | 979 | 979 |
| TD | 1027 | 1014 | 945 | 917 |
| psi (MPa)     MD | 1380 (9.5) | 1440 (9.9) | 1420 (9.8) | 1420 (9.8) |
| TD | 1490 (10.3) | 1470 (10.1) | 1370 (9.5) | 1330 (9.2) |
| | | | | |
| Elongation @ yield, %     MD | 6 | 6 | 6 | 6 |
| TD | 6 | 6 | 6 | 6 |
| | | | | |
| Tensile @ break,     N/cm$^2$     MD | 4654 | 5737 | 5440 | 6330 |
| TD | 4144 | 4158 | 5171 | 5026 |
| psi (MPa)     MD | 6750 (46.6) | 8320 (57.4) | 7890 (54.4) | 9180 (63.3) |
| TD | 6010 (41.5) | 6030 (41.6) | 7500 (51.8) | 7290 (50.3) |
| | | | | |
| Elongation @ break, %     MD | 730 | 470 | 630 | 410 |
| TD | 770 | 680 | 660 | 570 |
| | | | | |
| 1% Secant modulus, psi (MPa)     MD | 37700 (260) | 32200 (222) | 36700 (253) | 28500 (197) |
| TD | 42600 (294) | 36700 (253) | 37100 (256) | 30200 (208) |
| | | | | |
| Elmendorf tear, gms     MD | 1307 | 287 | 748 | 175 |
| TD | 1659 | 613 | 1141 | 383 |
| gms/mil (gms/μm)     MD | 472 (18.6) | 373 (14.7) | 276 (10.9) | 233 (9.2) |
| TD | 599 (23.6) | 796 (31.3) | 421 (16.6) | 510 (20.1) |
| | | | | |
| Dart impact     gms | 742 | 211 | 1534 | 1649 |
| gms/mil (gms/μm) | 268 (10.6) | 274 (10.8) | 566 (22.3) | 2199 (86.6) |
| | | | | |
| MD tensile @ 200% elongation, psi (MPa) | 1545 (10.7) | 2084 (14.4) | 1836 (12.7) | 2391 (16.5) |
| | | | | |
| Puncture force, lbf/mil (N/μm) | 5.5 (0.62) | 7.1 (0.80) | 6.8 (0.77) | 8.9 (1.00) |
| Puncture force energy, in-lbs/mil (mJ/μm) | 14.2 (63.2) | 18.0 (80.1) | 16.8 (74.7) | 23.0 (102.3) |
| | | | | |
| Gauge, mil     (μm)     Average | 2.77 (70.4) | .77 (19.6) | 2.71 (68.8) | .75 (19.1) |
| High | 2.92 (74.2) | .83 (21.1) | 2.99 (73.7) | .78 (19.8) |
| Low | 2.59 (65.8) | .68 (17.3) | 2.59 (65.8) | .68 (17.3) |
| | | | | |
| Reblock, gms | >214 | 169 | 165 | 64 |
| | | | | |

Table VII   (continued)

| Blown Film Evaluation Hexene-LLDPE | | | | |
|---|---|---|---|---|
| Resin | Exxon Escorene LL-3001.63 | | Resin E | |
| Target thickness | 3.0 mil | 0.75 mil | 3.0 mil | 0.75 mil |
| WVTR, g.mm/m$^2$.24 hours | .4606 | .4598 | .3826 | .4267 |
| | | | | |
| OTR, cm$^3$-mm/m$^2$.24 hours-ATM | 251 | 226 | 168 | 198 |

Dart impact was measured in accordance with ASTM(-D-1709, Method A.

Table VIII

| | Density g/cm$^3$ | MI dg/min |
|---|---|---|
| HDPE B | 0.952 | 0.045 |
| HDPE C | 0.9565 | 0.46 |
| LLDPE Resin F | 0.9174 | 2.9 |
| LLDPE Resin G | 0.920 | 0.83 |

Table IX -

| Base Conditions for Blown Film Line | |
|---|---|
| Die Gap: | 90 mil (2286 μm) |
| Screen Pack: | 20/40/80 |
| Extruder Screw: | Davis-Standard Barrier screw |
| Diverter: | Monolayer A/A/A |
| Die Type: | 10 inch Dual Lip (25.4 cm) |
| IBC: | No |
| Chilled Air Temp: | 39-50 deg F (3.9°C to 10°C) |
| Film Type: | Tubing |
| Tower Oscillation: | On sample collection |
| Barrel Zones #1 thru #8, deg F | 330/340/350/370/380/380/380/380 (165/171/177/188/193/193/193/193°C) |
| Die Zones 1 to 15, deg F | All @ 380 (193°C) |
| Estimated Screw RPM | 50 |
| Melt Temp Target, F | allowed to vary with condition |
| output Target, lbs/hr | 325 (147.4 kg/hr) |
| FLH Target, in. | 22 (55.9 cm) |
| BUR | 2.5 |
| Lay Flat Width, in. | 40 (101.6 cm) |
| Target Gauge, mils | 0.75 (19 μm) |

Table X -

| Base Conditions for Cast Film Line | |
|---|---|
| Die Gap (mils) | 20 (508 μm) |

Table X -   (continued)

| Base Conditions for Cast Film Line | |
|---|---|
| Extruder(s) Used | B |
| Feed block | three-layer |
| Chill Roll Temperature, deg F | 70-73 (21-23°C) |
| Barrel Zone Set Points, deg F | 350/400/450/480/530 (177/204/232/249/277°C) |
| Die Zone Set Points, deg F | all 550 (288°C) |
| Estimated Screw RPM | 65 |
| Melt Temp Target, F | allowed to reach equilibrium value |
| Output Target, lbs/hr | 407 (184.6 Kg/hr) |
| Line Speed Target (ft/min) | 500 (253.8 cm/sec) |
| Curtain Length, Inches | 3.5 (8.9 cm) |
| Target Gauge, mils | 0.8 (20.3 μm) |

Table X4 -

| LLDPE G/HDPE B Blend Blown Film Data (Using Dry Blend Method 1) | | | |
|---|---|---|---|
| Sample | 1 | 2 | 3 |
| LLDPE | LLDPE G | LLDPE G | LLDPE G |
| HDPE | none | HDPE B | HDPE B |
| WT. % HDPE | 0 | 1 | 3 |
| | | | |
| 44" (111.8 cm) Dart Drop (g/mil) | 898 (35.3 g/μm) | 926 (36.5 g/μm) | 869 34.2 g/μm) |
| | | | |
| Elm. Tear (g/mil) | | | |
| MD | 215 (8.5 g/μm) | 222/222* (8.7 g/μm) | 227 (8.9 g/μm) |
| TD | 504 (19.8 g/μm) | 507/494* (20.0 g/μm / 19.5 g/μm) | 546 (22.2 g/μm) |

\* Replicate test results.

Table X5

| LLDPE G/HDPE B Blend Blown Film Data (Using Dry Blend Method 1) | | | |
|---|---|---|---|
| Sample | 1 | 2 | 3 |
| Tensile | | | |
| Tensile @ Yield psi(kPa) | | | |
| MD | 1451(10004) | 1402(9667) | 1397(9632) |
| TD | 1418(9777) | 1545(10652) | 1460(10066) |
| Ultimate Tensile psi(kPa) | | | |
| MD | 11863(81793) | 9701(66886) | 9871(68059) |
| TD | 8188(56455) | 8324(57392) | 7474(51532) |
| Break Elongation (%) | | | |
| MD | 405 | 407 | 416 |

Table X5   (continued)

| LLDPE G/HDPE B Blend Blown Film Data (Using Dry Blend Method 1) | | | |
|---|---|---|---|
| **Sample** | **1** | **2** | **3** |
| **Break Elongation (%)** | | | |
| TD | 561 | 570 | 561 |
| | | | |
| **1 % Secant psi (KPa)** | | | |
| MD | 32300(222702) | 36020(248351)** | 36200(249592) |
| TD | 36100(248902) | 41180(283928)*** | 40380(278412) |
| | | | |
| Haze (%) | 10.4 | 5.3 | 5.1 |
| Gloss (%) | 51.9 | 68.6 | 66.6 |
| | | | |
| **Gauge Mic (mils)** | | | |
| Average | 0.74 (18.9 µm) | 0.76 (19.3 µm) | 0.76 (19.3 µm) |
| Gauge Variation (one sigma) | 0.048 | 0.049 | 0.065 |
| | | | |
| **Film DSC Data** | | | |
| Tm First Melt, Deg C | 118.92 | 120.24 | 120.39 |
| Peak Cryst Temp., Deg C | 106.39 | 106.93 | 107.82 |
| Tm Second Melt, Deg C | 119.56 | 120.6 | 121.05 |

** Retests yielded 33.14 kPa

*** Retests yielded 36.9 kPa

Table X6

| LLDPE G/HDPE Blend Blown Film Data (Using Melt Blend and Dry Blend Method 1) | | | | |
|---|---|---|---|---|
| **Sample** | **4** | **5** | **6** | **7** |
| Base Resin | LLDPE G | LLDPE G | LLDPE G | LLDPE G |
| HDPE | HDPE B | HDPE C | HDPE C | HDPE C |
| WT.% HDPE | 3 | 1 | 3 | 6 |
| Blend Method | Melt Blend | Dry Blend Method 1 | Dry Blend Method 1 | Dry Blend Method 1 |
| | | | | |
| 44" (111.8 cm) Dart Drop (g/ mil) (g/µm) | 523 (20.6) | 816 (32.1) | 740 (29.1) | 712 (28.0) |
| | | | | |
| Elm. Tear (g/mil)(g/µm) | | | | |
| MD | 217 (8.5) | 249 (9.8) | 238 (9.4) | 206 (8.1) |
| TD | 584 (23.0) | 526 (20.7) | 548 (21.6) | 605 (23.8) |

Table X7

| LLDPE G/HDPE Blend Blown Film Data (Using Melt Blend and Dry Blend Method 1) | | | | |
|---|---|---|---|---|
| Sample | 4 | 5 | 6 | 7 |
| **Tensile** | | | | |
| Tensile @ Yield psi(kPa) | | | | |
| MD | 1494(10301) | 1425(9825) | 1395(9618) | 1546(10659) |
| TD | 1489(10266) | 1495(10308) | 1480(10204) | 1618(11156) |
| Ultimate Tensile psi(kPa) | | | | |
| MD | 10963(75588) | 10767(74236) | 10056(69334) | 10271(70816) |
| TD | 7534(51945) | 7786(53683) | 8117(55965) | 7548(52042) |
| Break Elongation (%) | | | | |
| MD | 423 | 434 | 426 | 417 |
| TD | 583 | 536 | 562 | 549 |
| **1 % Secant psi(kPa)** | | | | |
| MD | 37700(259934) | 35030(241525) | 35870(247316) | 38900(268208) |
| TD | 37300(257176) | 33930(233941) | 37380(257728) | 43540(300200) |
| Haze (%) | 4.3 | 5.6 | 4.5 | 4.2 |
| Gloss (%) | 72.8 | 66.5 | 72.2 | 75.0 |
| **Gauge Mic (mils) (g/$\mu$m)** | | | | |
| Average | 0.74 (18.8) | 0.73 (18.5) | 0.76 (19.3) | 0.72 (18.3) |
| Gauge Variation (one sigma) | 0.055 | 0.061 | 0.083 | 0.070 |
| **Film DSC Data** | | | | |
| Tm First Melt, Deg C | 119.15 | 119.78 | 120.8 | 120.86 |
| Peak Cryst. Temp., Deg C | 107.27 | 106.68 | 107.63 | 108.73 |
| Tm Second Melt, Deg C | 120.13 | 120.2 | 120.92 | 121.2 |

Table X8

| LLDPE G/HDPE B Blend Blown Film Data (Using Dry Blend Method 2) | | | |
|---|---|---|---|
| Sample | 8 | 9 | 10 |
| Base Resin | LLDPE G | LLDPE G | LLDPE G |
| HDPE | none | HDPE B | HDPE B |
| % HDPE | 0 | 1 | 3 |
| | | | |
| **44 " Dart Drop** (g/mil) (g/$\mu$m) | 1314 (51.7) | 1143 (45.0) | 1237 (48.7) |
| | | | |
| **Elm. Tear (g/mil) (g/$\mu$m)** | | | |
| MD | 236 (9.3) | 230 (9.1) | 238 (9.4) |

Table X8   (continued)

| LLDPE G/HDPE B Blend Blown Film Data (Using Dry Blend Method 2) | | | |
|---|---|---|---|
| **Sample** | **8** | **9** | **10** |
| TD | 480 (18.9) | 534 (21.0) | 566 (22.3) |
| | | | |
| **Tensile** | | | |
| Tensile @ Yield psi(kPa) | | | |
| MD | 1247(8598) | 1305(8998) | 1287(8874) |
| TD | 1295(8929) | 1384(9542) | 1476(10177) |
| Ultimate Tensile psi(kPa) | | | |
| MD | 8887(61274) | 6631(45719) | 9309(64184) |
| TD | 5868(40459) | 7338(50594) | 6983(48146) |
| Break Elongation (%) | | | |
| MD | 425 | 353 | 419 |
| TD | 464 | 419 | 542 |
| | | | |
| **1 % Secant psi(kPa)** | | | |
| MD | 32230(222219) | 33360(230011) | 34020(234561) |
| TD | 32900(226839) | 37420(258003) | 40940(282273) |
| | | | |
| Haze (%) | 9.3 | 6.4 | 5.3 |
| Gloss (%) | 54.2 | 62.8 | 68.5 |

Table X9

| LLDPE F/HDPE Blend Cast Film Data (Using Melt Blending and Dry Blend Method 1) | | | | |
|---|---|---|---|---|
| **Sample** | **11** | **12** | **13** | **14** |
| Base Resin | LLDPE F | LLDPE F | LLDPE F | LLDPE F |
| HDPE | none | HDPE B | HDPE B | HDPE B |
| % HDPE | 0 | 1 | 3 | 3 |
| | | | | |
| Blend Method | none | Dry Blend Method 1 | Dry Blend Method 1 | Melt Blend |
| | | | | |
| **44" (111.8 cm) Dart Drop** (g/mil)(g/$\mu$m) | 968 (38.1) | 947 (37.3) | 184 (7.2) | 247 (9.7) |
| | | | | |
| **Elm. Tear (g/mil) (g/$\mu$m)** | | | | |
| MD | 294.6 (11.6) | 270.4 (10.6) | 244.9 (9.6) | 311.8 (12.3) |
| TD | 549.8 (21.6) | 518.9 (20.4) | 534.3 (21.0) | 625.8 (24.6) |

Table X10

| LLDPE F/HDPE B Blend Cast Film Data (Using Melt Blending and Dry Blend Method 1) | | | | |
|---|---|---|---|---|
| **Sample** | 11 | 12 | 13 | 14 |
| **Tensile** | | | | |
| Tensile @ Yield psi(kPa) | | | | |
| MD | 1046 (7212) | 1077 (7426) | 1121 (7729) | 1231 (8487) |
| TD | 993 (6847) | 1085 (7481) | 1091 (7522) | 1170 (8067) |
| Ultimate Tensile psi(kPa) | | | | |
| MD | 9022 (62205) | 8288 (57144) | 7124 (49119) | 8658 (59695) |
| TD | 628 (4330) | 624 (4302) | 617 (4254) | 625 (4309) |
| Break Elongation (%) | | | | |
| MD | 493 | 491 | 459 | 506 |
| TD | 628 | 624 | 617 | 625 |
| | | | | |
| MD Stress @ | | | | |
| 100% Elongation psi(kPa) | 1621 (11176) | 1601 (11039) | 1619 (11163) | 1747 (12045) |
| 200% Elongation psi(kPa) | 1869 (12886) | 1816 (12521) | 1845 (12721) | 1961 (13521) |
| 300% Elongation psi(kPa) | 2809 (19367) | 2688 (18533) | 2747 (18940) | 2843 (19602) |
| 400% Elongation psi(kPa) | 5307 (36591) | 4966 (34240) | 5037 (34729) | 5008 (34529) |
| | | | | |
| **1 % Secant psi(kPa)** | | | | |
| MD | 20360 (140378) | 21430 (147756) | 23220 (160097) | 25300 (174438) |
| TD | 21130 (145687) | 23580 (162579) | 24930 (171887) | 25320 (174576) |
| Haze (%) | 1.2 | 4.5 | 3.9 | 1.2 |
| Gloss (%) | 92.8 | 82.4 | 80.1 | 92.1 |
| **Gauge Mic (mils) ($\mu$m)** | | | | |
| Average | 0.81(20.6) | 0.87(22.1) | 0.89(22.6) | 0.82(20.8) |
| Gauge Variation (one Sigma) | 0.023 | 0.055 | 0.054 | 0.048 |

## Claims

1. A polymeric film comprising at least a first layer comprising at least 80 % by weight of an ethylene copolymer resin having an Mz/Mw less than 2.0 and said first layer having a dart impact strength in excess of 100 g/mil, (as measured by ASTM D 1209 method A except that a 112 cm drop is used) those polymeric films being excluded which consist of LLDPE with a density of at least 0.900 and an MFR of 15 to 25.

2. The film of claim 1 wherein the first layer comprises a blend of the ethylene copolymer resin with one of, or a combination of, the polymers selected from the group consisting of polypropylene and ethylene propylene copolymers, VLDPE, plastomers, EVA, EMA, copolymers of acrylic acid, polymethylmethacrylate or any other polymers polymerizable by a high-pressure free radical process, PVC, polybutene-1, isotactic polybutene, ABS resins, elastomers such as ethylene-propylene rubber (EPR), vulcanized EPR, EPDM, block copolymer elastomers such as SBS, nylons, polycarbonates, PET resins, crosslinked polyethylene, copolymers of ethylene and vinyl alcohol (EVOH), polymers of aromatic monomers such as polystyrene, poly-1 esters, high molecular weight HDPE, low molecular weight HDPE, graft copolymers generally, polyacrylonitrile homopolymer or copolymers, thermoplastic polyamides, polyacetal, polyvinylidine fluoride and other fluorinated elastomers, polyethylene glycols, polyisobutylene (PIB), hydrocarbon resins, terpene resins, and other tackifying polymers.

3. The film of claim 1 wherein the first layer comprises a blend of 80 to 99 weight % of the ethylene copolymer resin and 1 to 20 weight % LDPE.

4. The film of claim 2 wherein the first layer comprises a blend of the ethylene copolymer resin and HMW-HDPE, wherein said HMW-HDPE has a density of 0.940 g/cm$^3$ or greater and contains polymer chains that contain at least 20,000 carbon atoms.

5. The film of claim 4 wherein the HMW-HDPE is a homopolymer of ethylene or is a copolymer of ethylene and propylene, butene, pentene, hexene, heptene, octene, nonene, decene, dodecene, 3-methyl-pentene-1, or 3,5,5-trimethylhexene-1.

6. The film of claim 4 or 5 wherein the HMW-HDPE has a bimodal molecular weight distribution and at least one of the modes has a weight average molecular weight of at least 300,000.

7. The film of any of claims 2 to 6 which is a blown or cast film in a mono-layer construction formed by extrusion.

8. The film of any of the claims 1 to 6 wherein the film is a blown or cast film in a multilayer construction formed by co-extrusion or lamination.

9. The film of claim 8 wherein the first layer is a skin layer in a co-extruded film.

10. The film of claim 8 wherein the first layer is a core layer.

11. The film of any of the preceding claims wherein the first layer further comprises fillers, antioxidants, tackifiers, UV stabilizers, heat stabilizers, pigments, dyes, waxes, silica, or talc.

12. The film of any of the preceding claims wherein the ethylene copolymer resin has a Composition Distribution Breadth Index (which is the weight percent of the copolymer molecules having a comonomer content within 50% of the median total molar comonomer content) in the range of 55% to 90%.

13. The film of any of the preceding claims wherein the ethylene copolymer resin has an Mw/Mn of 3 to 4.

14. The film of any of the preceding claims wherein the ethylene copolymer resin:

> is a copolymer of ethylene and hexene or octene,
> has a melt index in the range of between 0.1 and 5 dg/min,
> has a density in the range of 0.900 - 0.940 g/cm$^3$, and the film:
> has a haze less than 15%,
> has an extractables level below 2 %, preferably less than 1 %, and
> has a dart impact strength above 310 g/mil measured after aging the film at 60°C for 48 hours.

15. The film of any of claims 1 to 5 wherein the ethylene copolymer resin is formed into a cast film having a dart impact strength represented by the formula:

$$D^{\frac{1}{2}} \geq 1/[(2.4927 \times 10^{-6})(M) + 0.02]$$

where D is the dart impact strength and M is the average of the Machine Direction and Transverse Direction 1% secant moduli.

16. The film of any of claims 1 to 5 wherein the ethylene copolymer resin is construction formed into a blown film having a dart impact strength represented by the formula:

$$D^{\frac{1}{2}} \geq 1/[(2.4927 \times 10^{-6})(M) - 0.02]$$

where D is the dart impact strength and M is the average of the Machine Direction and Transverse Direction 1% secant moduli.

17. The use of a polymeric film comprising at least a first layer comprising at least 80 % by weight of an ethylene copolymer resin having an Mz/Mw less than 2.0 and said first layer having a dart impact strength in excess of 100 g/mil, (as measured by ASTM D 1209 method A except that a 112 cm drop is used) wherein the film is a blown or cast film in a mono-layer or multilayer construction formed by extrusion, co-extrusion or lamination as a shrink film, cling film, stretch film, sealing film, oriented film, or laminating film.

18. The use of a polymeric film comprising at least a first layer comprising at least 80 % by weight of an ethylene copolymer resin having an Mz/Mw less than 2.0 and said first layer having a dart impact strength in excess of 100 g/mil (as measured by ASTM D 1209 method A except that a 112 cm drop is used), as a flexible pouch, a pallet stretch wrap, food wrap, heavy duty shipping sack, industrial liner, can liner, stretch film, heavy wall bag, grocery sack, consumer trash bag, food package, trash can liner, or a heavy duty bag.

**Patentansprüche**

1. Polymere Folie, die mindestens eine erste Schicht umfaßt, die mindestens 80 Gew.% Ethylencopolymerharz mit einem $\overline{M}_z/\overline{M}_w$ von weniger als 2,0 umfaßt, wobei die erste Schicht eine Fallbolzen-Schlagfestigkeit über 100 g/mil (gemessen mittels ASTM D 1209, Verfahren A, außer daß ein Fall von 112 cm verwendet wurde) aufweist, unter Ausschluß von solchen polymeren Folien, die aus LLDPE mit einer Dichte von mindestens 0,900 und einer Schmelzfließgeschwindigkeit (MFR) von 15 bis 25 bestehen.

2. Folie nach Anspruch 1, bei der die erste Schicht einen Blend aus dem Ethylencopolymerharz mit einem oder einer Kombination aus den Polymeren ausgewählt aus der Gruppe bestehend aus Polypropylen und Ethylen/Propylen-Copolymeren, VLDPE, Plastomeren, EVA, EMA, Copolymeren von Acrylsäure, Polymethylmethacrylat oder jeglichen anderen Polymeren, die nach einem freiradikalischen Hochdruckverfahren polymerisierbar sind, PVC, Polybuten-1, isotaktischem Polybuten, ABS-Harzen, Elastomeren wie Ethylen/Propylen-Kautschuk (EPR), vulkanisiertem EPR, EPDM, Blockcopolymerelastomeren wie SBS, Nylons, Polycarbonaten, PET-Harzen, vernetztem Polyethylen, Copolymeren von Ethylen und Vinylalkohol (EVOH), Polymeren von aromatischen Monomeren wie Polystyrol, Poly-1-ester, HDPE mit hohem Molekulargewicht, HDPE mit niedrigem Molekulargewicht, Pfropfcopolymeren im allgemeinen, Polyacrylnitrilhomopolymer oder -copolymeren, thermoplastischen Polyamiden, Polyacetal, Polyvinylidenfluorid und anderen fluorierten Elastomeren, Polyethylenglykolen, Polyisobutylen (PIB), Kohlenwasserstoffharzen, Terpenharzen und anderen klebrigmachenden Polymeren umfaßt.

3. Folie nach Anspruch 1, bei der die erste Schicht einen Blend aus 80 bis 99 Gew.% des Ethylencopolymerharzes und 1 bis 20 Gew.% LDPE umfaßt.

4. Folie nach Anspruch 2, bei der die erste Schicht einen Blend aus dem Ethylencopolymerharz und HDPE mit hohem Molekulargewicht umfaßt, wobei das HDPE mit hohem Molekulargewicht eine Dichte von 0,940 g/cm$^3$ oder größer hat und Polymerketten enthält, die mindestens 20 000 Kohlenstoffatome enthalten.

5. Folie nach Anspruch 4, bei der das HDPE mit hohem Molekulargewicht ein Homopolymer von Ethylen oder ein Copolymer aus Ethylen und Propylen, Buten, Penten, Hexen, Hepten, Octen, Nonen, Decen, Dodecen, 3-Methylpenten-1 oder 3,5,5-Trimethylhexen-1 ist.

6. Folie nach Anspruch 4 oder 5, bei der das HDPE mit hohem Molekulargewicht eine bimodale Molekulargewichtsverteilung aufweist und mindestens einer der Modi ein durchschnittliches Molekulargewicht (Gewichtsmittel) von mindestens 300 000 aufweist.

7. Folie nach einem der Ansprüche 2 bis 6, die eine geblasene oder gegossene Folie in einer Monoschichtkonstruktionsweise ist, die durch Extrusion gebildet ist.

8. Folie nach einem der Ansprüche 1 bis 6, bei der die Folie eine geblasene oder gegossene Folie in Mehrschichtenkonstruktionsweise ist, die durch Coextrusion oder Laminierung gebildet ist.

9. Folie nach Anspruch 8, bei der die erste Schicht eine Hautschicht in einer coextrudierten Folie ist.

**10.** Folie nach Anspruch 8, bei der die erste Schicht eine Kernschicht ist.

**11.** Folie nach einem der vorhergehenden Ansprüche, bei der die erste Schicht außerdem Füllstoffe, Antioxidantien, Klebrigmacher, UV-Stabilisatoren, Wärmestabilisatoren, Pigmente, Farbstoffe, Wachse, Siliciumdioxid oder Talkum umfaßt.

**12.** Folie nach einem der vorhergehenden Ansprüche, bei der das Ethylencopolymerharz einen Breitenindex der Zusammensetzungsverteilung (welcher der Gewichtsprozentsatz der Copolymermoleküle mit einem Comonomergehalt innerhalb von 50 % des Medianwertes des gesamten molaren Comonomergehalts ist) im Bereich von 55 % bis 90 % hat.

**13.** Folie nach einem der vorhergehenden Ansprüche, bei der das Ethylencopolymerharz ein $\overline{M}_w/\overline{M}_n$ von 3 bis 4 hat.

**14.** Folie nach einem der vorhergehenden Ansprüche, bei der das Ethylencopolymerharz ein Copolymer aus Ethylen und Hexen oder Octen ist, einen Schmelzindex im Bereich zwischen 0,1 und 5 dg/Min hat, eine Dichte im Bereich von 0,900 bis 0,940 g/cm$^3$ hat und die Folie eine Trübung von weniger als 15 % hat, einen Gehalt an extrahierbarem Material unter 2 %, vorzugsweise unter 1 % hat und eine Fallbolzen-Schlagfestigkeit über 310 g/mil hat, gemessen nach Alterung der Folie bei 60°C für 48 h.

**15.** Folie nach einem der Ansprüche 1 bis 5, bei der das Ethylencopolymerharz zu einer gegossenen Folie mit einer Fallbolzen-Schlagfestigkeit geformt wird, die durch die Formel

$$D^{\frac{1}{2}} \geq 1 / [(2{,}4927 \bullet 10^{-6})(M) + 0{,}02]$$

wiedergegeben wird, wobei D die Fallbolzen-Schlagfestigkeit ist und M der Mittelwert des 1 % Sekantenmoduls in Maschinenrichtung und Querrichtung ist.

**16.** Folie nach einem der Ansprüche 1 bis 5, bei der das Ethylencopolymerharz zu einer geblasenen Folie mit einer Fallbolzen-Schlagfestigkeit geformt wird, die durch die Formel

$$D^{\frac{1}{2}} \geq 1 / [(2{,}4927 \bullet 10^{-6})(M) - 0{,}02]$$

wiedergegeben wird, wobei D die Fallbolzen-Schlagfestigkeit ist und M der Mittelwert des 1 % Sekantenmoduls in Maschinenrichtung und Querrichtung ist.

**17.** Verwendung einer polymeren Folie, die mindestens eine erste Schicht umfaßt, die mindestens 80 Gew.% Ethylencopolymerharz mit einem $\overline{M}_z/\overline{M}_w$ von weniger als 2,0 umfaßt, wobei die erste Schicht eine Fallbolzen-Schlagfestigkeit über 100 g/mil (gemessen mittels ASTM D 1209, Verfahren A, außer daß ein Fall von 112 cm verwendet wird) aufweist, wobei die Folie eine geblasene oder gegossene Folie in einer Monoschicht- oder Mehrschichtenkonstruktionsweise ist, die durch Extrusion, Coextrusion oder Laminierung gebildet ist, als Schrumpffolie, Haftfolie, elastische Folie, Abdichtfolie, orientierte Folie oder Laminierungsfolie.

**18.** Verwendung einer polymeren Folie, die mindestens eine erste Schicht umfaßt, die mindestens 80 Gew.% Ethylencopolymerharz mit einem $\overline{M}_z/\overline{M}_w$ von weniger als 2,0 umfaßt, wobei di.e erste Schicht eine Fallbolzen-Schlagfestigkeit über 100 g/mil (gemessen mittels ASTM D 1209, Verfahren A, außer daß ein Fall von 112 cm verwendet wird) aufweist, als flexibler Beutel, Streckverpackung für Paletten, Nahrungsmittelverpackung, Schwerguttransportsack, technisches Auskleidematerial, Dosenauskleidematerial, Streckfolie, dickwandige Beutel, Lebensmitteltüten, Müllbeutel für Endverbraucher, Nahrungsmittelverpackungsmaterial, Abfalltonnenauskleidung oder Schwerlastbeutel.

## Revendications

**1.** Film polymérique comprenant au moins une première couche renfermant au moins 80 % en poids d'une résine de copolymère d'éthylène ayant une valeur du rapport Mz/Mw inférieure à 2,0 et ladite première couche ayant une résistance au choc de masse tombante supérieure à 100 g/mil (mesurée par le procédé A de la norme ASTM D1209, sauf qu'une chute d'une hauteur de 112 cm est utilisée), les films polymériques consistant en un PELBD ayant une densité d'au moins 0,900 et une vitesse d'écoulement en masse fondue de 15 à 25 étant exclus.

2. Film polymérique suivant la revendication 1, dans lequel la première couche comprend un mélange de la résine de copolymère d'éthylène avec un, ou une association, des polymères choisis dans le groupe consistant en polypropylène et copolymères éthylène-propylène, PETBD, des plastomères, EVA, EMA, des copolymères d'acide acrylique, un polymère de méthacrylate de méthyle ou n'importe quels autres polymères polymérisables par un procédé radicalaire haute pression, le PVC, le polybutène-1, le polybutène isotactique, des résines ABS, des élastomères tels qu'un caoutchouc éthylène-propylène (EPR), un EPR vulcanisé, un EPDM, des élastomères consistant en copolymères séquencés tels que le SBS, des Nylons, des polycarbonates, des résines de PET, un polyéthylène réticulé, des copolymères d'éthylène et d'alcool vinylique (EVOH), des polymères de monomères aromatiques tels que le polystyrène, des poly-1-esters, un PEHD de haut poids moléculaire, un PEHD de bas poids moléculaire, des copolymères greffés de manière générale, un homopolymère ou des copolymères de polyacrylonitrile, des polyamides thermoplastiques, un polyacétal, un polymère de fluorure de vinylidène et d'autres élastomères fluorés, des polyéthylèneglycols, le polyisobutylène (PIB), des résines hydrocarbonées, des résines terpéniques et d'autres polymères d'adhésivité.

3. Film suivant la revendication 1, dans lequel la première couche comprend un mélange de 80 à 99 % en poids de la résine de copolymère d'éthylène et de 1 à 20 % en poids de PEBD.

4. Film suivant la revendication 2, dans lequel la première couche comprend un mélange de la résine de copolymère d'éthylène et de PEHD-HPM, dans lequel ledit PEHD-HPM a une masse volumique égale ou supérieure à 0,940 g/cm$^3$ et contient des chaînes polymériques renfermant au moins 20 000 atomes de carbone.

5. Film suivant la revendication 4, dans lequel le PEHD-HPM est un homopolymère d'éthylène ou est un copolymère d'éthylène et de propylène, de butène, de pentène, d'hexène, d'heptène, d'octène, de nonène, de décène, de dodécène, de 3-méthylpentène-1 ou de 3,5,5-triméthylhexène-1.

6. Film suivant la revendication 4 ou 5, dans lequel le PEHD-HPM a une distribution bimodale des poids moléculaires et au moins un des modes a une moyenne pondérale des poids moléculaires d'au moins 300 000.

7. Film suivant l'une quelconque des revendications 2 à 6, qui est un film soufflé ou coulé à structure monocouche formée par extrusion.

8. Film suivant l'une quelconque des revendications 1 à 6, dans lequel le film est un film soufflé ou coulé à structure multicouche formée par coextrusion ou stratification.

9. Film suivant la revendication 8, dans lequel la première couche est une couche pelliculaire dans un film coextrudé.

10. Film suivant la revendication 8, dans lequel la première couche est une couche centrale.

11. Film suivant l'une quelconque des revendications précédentes, dans lequel la première couche comprend en outre des charges, des antioxydants, des agents d'adhésivité, des stabilisants UV, des thermostabilisants, des pigments, des colorants, des cires, de la silice ou du talc.

12. Film suivant l'une quelconque des revendications précédentes, dans lequel la résine de copolymère d'éthylène a un indice d'étendue de distribution de composition (qui est le pourcentage en poids des molécules de copolymère ayant une teneur en comonomère dans les limites de 50 % de la teneur moléculaire totale médiane en comonomère) dans l'intervalle de 55 % à 90 %.

13. Film suivant l'une quelconque des revendications précédentes, dans lequel la résine de copolymère d'éthylène a un rapport Mw/Mn de 3 à 4.

14. Film suivant l'une quelconque des revendications précédentes, dans lequel la résine de copolymère d'éthylène :

est un copolymère d'éthylène et d'hexène ou d'octène,
a un indice de fluidité compris dans l'intervalle de 0,1 à 5 dg/min,
a une masse volumique comprise dans l'intervalle de 0,900 à 0,940 g/cm$^3$,

ledit film :

ayant un voile inférieur à 15 %,

ayant une teneur en matières extractibles inférieure à 2 %, de préférence inférieure à 1 %, et

ayant une résistance au choc d'une masse tombante supérieure à 310 g/mil mesurée après vieillissement du film à 60°C pendant 48 heures.

15. Film suivant l'une quelconque des revendications 1 à 5, dans lequel la résine de copolymère d'éthylène est mise sous forme d'un film coulé ayant une résistance au choc d'une masse tombante représentée par la formule :

$$D^{\frac{1}{2}} \geq 1/[(2,4927 \times 10^{-6})\,(M) + 0,02]$$

dans laquelle D représente la résistance au choc d'une masse tombante et M représente la moyenne du module sécant à 1 % dans la Direction Machine et du module sécant à 1 % dans la Direction Transversale.

16. Film suivant l'une quelconque des revendications 1 à 5, dans lequel la résine de copolymère d'éthylène est mise sous forme d'un film soufflé ayant une résistance au choc d'une masse tombante représentée par la formule :

$$D^{\frac{1}{2}} \geq 1/[(2,4927 \times 10^{-6})(M) - 0,02]$$

dans laquelle D représente la résistance au choc d'une masse tombante et M représente la moyenne du module sécant à 1 % dans la Direction Machine et du module sécant à 1 % dans la Direction Transversale.

17. Utilisation d'un film polymérique comprenant une première couche comprenant au moins 80 % en poids d'une résine de copolymère d'éthylène ayant une valeur de Mz/Mw inférieure à 2,0, ladite première couche ayant une résistance au choc d'une masse tombante supérieure à 100 g/mil (mesurée par le procédé A de la norme ASTM D1209, à l'exception de l'utilisation d'une chute d'une hauteur de 112 cm), dans laquelle le film est un film soufflé ou coulé à structure monocouche ou multicouche formée par extrusion, coextrusion ou stratification sous forme d'un film rétractable, d'un film auto-adhérent, d'un film étirable, d'un film étanche, d'un film orienté ou d'un film stratifié.

18. Utilisation d'un film polymérique comprenant une première couche renfermant au moins 80 % en poids d'une résine de copolymère d'éthylène ayant une valeur de Mz/Mw inférieure à 2,0, ladite première couche ayant une résistance au choc d'une masse tombante supérieure à 100 g/mil (mesurée par le procédé A de la norme ASTM D1209, sauf qu'une chute d'une hauteur de 112 cm est utilisée), sous forme d'une poche flexible, d'un film d'emballage par étirage sur palette, d'un film d'emballage alimentaire, d'un sac de transport pour conditions sévères, d'un revêtement industriel, d'un revêtement de boîte métallique, d'un film étirable, d'un sac à paroi épaisse, d'un sac d'épicerie, d'un sac poubelle, d'un emballage alimentaire, d'un revêtement de boîte à ordures ou d'un sac pour utilisation dans des conditions sévères.

FIG.1

EP 0 699 219 B1

FIG. 2

FIG. 3

STRENGTH (N/l5 MM)

SEAL TEMPERATURE (C)

LL3001.63
RESIN E

FIG. 4

FIG. 5

EP 0 699 219 B1

FIG. 6

EP 0 699 219 B1